# EUROPEAN PATENT APPLICATION

(11) **EP 4 668 864 A1**
(43) Date of publication of application: **24.12.2025**
(21) Application number: 23922921.4
(22) Date of filing: 12.12.2023
(51) Int. Cl.: H04W 36/08, H04W 36/24, H04W 36/36, H04W 52/02

(54) **RADIO TERMINAL, RADIO ACCESS NETWORK NODE, AND METHODS FOR SAME**

(30) Priority: 14.02.2023 JP 2023020904
(71) Applicant: NEC Corporation, Tokyo 108-8001 (JP)
(72) Inventor: FUTAKI Hisashi, Tokyo 108-8001 (JP)
(74) Representative: Mathys & Squire
(86) International application number: PCT/JP2023/044363
(87) International publication number: WO 2024/171588

(57) **Abstract**

A radio terminal receives a first message containing configuration information for a conditional handover. The radio terminal executes the conditional handover on a condition that a first threshold time period has expired, after receiving a first signal regarding low activity of a source cell of the conditional handover, following reception of the first message. For example, this contributes to improving a trigger for executing a conditional handover.

## Description

### Technical Field

The present disclosure relates to a radio communication network and particularly to various technologies that directly or indirectly contribute to improving network energy saving.

### Background Art

For 3rd Generation Partnership Project (3GPP (registered trademark)) Release 18, the 3GPP has discussed network energy saving (see, for example, Non-Patent Literature 1-7). Network energy saving is abbreviated as NES.

Non-Patent Literature 1 introduces various technologies for improving network energy saving. These technologies include adaptive transmission and reception of signals by a network in the time domain. For example, the network may adapt the transmission pattern of downlink common channels and signals, or may adapt the transmission pattern or availability of uplink random access occasions. A potential list of downlink common channels and signals includes, for example, Synchronization Signal (SS)/Physical Broadcast Channel (PBCH) block (SSB), System Information (SI), paging, and cell common Physical Downlink Control Channel (PDCCH).

Additionally or alternatively, the network may reduce or omit time occasions for UE-specific resources during a period of low activity or inactivity of a cell. A potential list of UE-specific resources includes periodic/semi-static Channel State Information Reference Signal (CSI-RS), group-common/UE-specific PDCCH, Semi-Persistent Scheduling (SPS) Physical Downlink Shared Channel (PDSCH), Physical Uplink Control Channel (PUCCH) carrying Scheduling Request (SR), PUCCH/Physical Uplink Shared Channel (PUSCH) carrying CSI reports, PUCCH carrying hybrid automatic repeat request-acknowledgement (HARQ-ACK) for SPS, Configured Grant (CG) PUSCH, Sounding Reference Signal (SRS), and Positioning Reference Signal (PRS).

The network may provide a mechanism for notifying UEs whether a cell is inactive. This may include UE DRX configuration enhancements, such as adjusting or omitting the discontinuous reception (DRX) cycle or DRX start offset for UEs in connected mode or idle or active mode, thereby potentially allowing for longer opportunities for cell inactivity. During a cell discontinuous transmission (DTX) or DRX, the cell may have no transmission or reception, or may only keep limited transmission or reception. For example, the cell does not need to transmit or receive some periodic signals and channels, such as common channels and signals, or UE-specific signals and channels.

Other technologies for improving NES include those in the frequency domain. In one example of a frequency domain technology, the network may support inter-band Carrier Aggregation (CA) using an SSB-less Secondary Cell (SCell). Additionally or alternatively, frequency domain technologies may support enhancements to enable a UE-group-common or cell-specific Bandwidth Part (BWP) configuration or BWP switching, or both. These technologies may support functional enhancements that enable SPS PDSCH reception, Type-2 CG PUSCH transmission, and SP-CSI reporting on PUSCH without requiring reactivation after BWP switching. Additionally or alternatively, frequency domain technologies may support enhancements to enable adaptation of the bandwidth of active BWPs through group common signaling, allowing continued operation in the same BWP. Some frequency resources within an active BWP may be deactivated.

Further other technologies for improving NES include technologies in the spatial domain. Spatial domain technologies may enhance the dynamic adaptation of spatial elements, such as the number of active transceiver chains or the number of active antenna panels in a gNB, in the transmission or reception of channels and signals, or both. Additionally or alternatively, spatial domain technologies may support dynamic adaptation of the number of TRPs that transmit and/or receive channels and signals in a case where UEs are configured with multiple Transmission and Reception Points (TRPs).

Still other techniques for improving NES include technologies in the power domain. These technologies may enable dynamic adaptation of transmission power or power spectral density (PSD) of downlink signals and channels by enhancing relevant configuration for UEs (e.g., power offset considering potential power adaptation) and/or UE feedback (e.g., CSI reports).

Non-Patent Literature 1 states that, from the perspective of the upper layer for NES, cell selection and reselection and connected mode mobility enhancements can be discussed. With regard to cell selection and reselection enhancements, Non-Patent Literature 1 states that, for backward compatibility, there is a need to allow NES cells to prevent legacy UEs from camping. More specifically, Non-Patent Literature 1 states that NES cells need to be able to configure whether to prevent legacy UEs, while allowing NES-capable UEs to camp on. Possible solutions include, but are not limited to, using an IntraFreqExcludedCellList or an InterFreqExcludedCellList or both, or using cellBarred or cell reservation fields transmitted in Master Information Block (MIB) or System Information Block (SIB).

On the other hand, with regard to connected mode mobility enhancements, Non-Patent Literature 1 states that during the switching of NES modes, it is possible to accelerate handovers of UEs by enhancing the conditional handover (CHO) framework. These enhancements include evaluation of conditional handover conditions depending on the NES mode of the source cell, target cell, or both, and a method for indicating to a UE the triggering (or initiation) of the CHO evaluation.

Note that, currently, the definitions of the terms "NES cell" and "NES mode" are not yet clear. The terms "NES cell" and "NES mode" are considered to refer to an operating mode or state in which power consumption is reduced by using one or more of the various technologies described above for improving NES, or by using other technologies, or may refer to a cell in such an operating mode or state. The terms "NES cell" and "NES mode" may be replaced by other similar terms. For example, these may be replaced with terms such as NES state or period; low activity cell, mode, state, or period; inactive cell, mode, state, or period; deactivated/deactivation cell, mode, state, or period; or sleep cell, mode, state, or period.

Non-Patent Literature 2 states that one of the detailed objectives of the working item relating to NES in 3GPP Release 18 is to specify enhancements to the CHO procedure in cases where the target cell or the source cell is in NES mode.

Non-Patent Literature 3 states that there is a proposal to associate the CHO execution condition with the NES state (or NES mode) of the source cell in relation to handover scenario 1 (UEs are Handover due to switch of SOURCE cell to NES mode).In the existing CHO, the UE promptly starts evaluating the CHO execution condition in response to the reception of the CHO configuration including the CHO execution condition. Non-Patent Literature 3 states that there is a proposal to use a separate indication (NES mode indication) to the UE regarding the NES mode of the source cell in order to delay evaluation of the CHO execution condition.

Non-Patent Literature 4 proposes a CHO triggered by the UE determining that the source cell has entered NES mode, and more specifically proposes using the reception of an NES mode indication regarding the source cell as a CHO event trigger.

Non-Patent Literature 5 states that SI modification is necessary to reduce SSB transmission power, and that there are disadvantages to using the SI modification to notify UEs of cell deactivation in the source cell, specifically that cell power reduction is restricted by the SI modification period. For faster offloading/onloading of the active UEs, Non-Patent Literature 5 suggests notifying UEs of a future cell transmit power adjustment (decrease/increase) in a separate way from the step-by-step SI modification.

Additionally, Non-Patent Literature 5 states that CHO is effective for faster offloading/onloading of active UEs, but that the evaluation of CHO execution conditions may need to be changed so that the evaluation is triggered by cell deactivation rather than immediate evaluation in response to receipt of a CHO configuration. Non-Patent Literature 5 also states that, in NR non-terrestrial networks (NTN), event T1 with a delay component associated with an event trigger is defined as a method for executing CHO, and that similar considerations are necessary for cell activation.

Non-Patent Literature 6 states that the group mobility mechanism appears to be suitable for cases where the cell state changes dynamically. Non-Patent Literature 6 states that CHO configurations are provided to connected mode UEs by dedicated signaling, but that UEs do not start evaluation at this point. Non-Patent Literature 6 states that the network indicates a trigger for the CHO by Layer 1 (L1) or Layer 2 (L2) signaling based on the switching of the cell state from normal mode to NES mode.

Non-Patent Literature 7 states that, with regard to handover scenario 1 (UEs are Handover due to switch of SOURCE cell to NES mode), in order to apply CHO for NES purposes, it is necessary to update CHO execution conditions to indicate a change in the NES mode of the source cell. More specifically, Non-Patent Literature 7 states that a CHO execution condition may be that the UE receives an indication from the serving cell that the NES mode of the cell has been changed.

Additionally, Non-Patent Literature 7 states that one method of providing the indication of the NES mode of the source cell may be broadcast Radio Resource Control (RRC) signaling (e.g., SI update, paging), although this method is not recommended due to its disadvantages. Non-Patent Literature 7 states that the indication of the NES mode of the source cell may be sent by other methods, specifically dedicated RRC signaling (e.g., RRCReconfiguration), L2 signaling (e.g., Medium Access Control (MAC) Control Element (CE)), dedicated L1 signaling (e.g., dedicated Downlink Control Information (DCI)), or common L1 signaling (e.g., group common DCI). Non-Patent Literature 7 suggests using common L1 signaling for the indication of a change in the NES mode of the source cell.

### Citation List

### Non Patent Literature

[Non-Patent Literature 1] 3GPP TR 38.864 V18.0.0 (2022-12) "3rd Generation Partnership Project; Technical Specification Group Radio Access Network; Study on network energy savings for NR (Release 18)", January 2023
[Non-Patent Literature 2] Huawei, "New WID: Network energy savings for NR", RP-223540, 3GPP TSG RAN Meeting #98-e, December 12-16, 2022
[Non-Patent Literature 3] Nokia, "[PRE120][304][NES] Summary of Connected Mode Mobility - 8.3.5 (Nokia)", R2-2213703, 3GPP TSG-RAN WG2 Meeting #120, Toulouse, France, November 14-18, 2022
[Non-Patent Literature 4] InterDigital, "NES mobility aspects", R2-2212326, 3GPP TSG-RAN WG2 Meeting #120, Toulouse, France, November 14-18, 2022
[Non-Patent Literature 5] Nokia, Nokia Shanghai Bell, "Mobility enhancements for NES", R2-2211968, 3GPP TSG-RAN WG2 Meeting #120, Toulouse, France, November 14-18, 2022
[Non-Patent Literature 6] Fujitsu, "Consideration on group mobility for network energy saving", R2-2212641, 3GPP TSG-RAN WG2 Meeting #120, Toulouse, France, November 14-18, 2022
[Non-Patent Literature 7] Intel Corporation, "Further considerations of group handover", R2-2212115, 3GPP TSG-RAN WG2 Meeting #120, Toulouse, France, November 14-18, 2022
[Non-Patent Literature 8] 3GPP TS 38.331 V17.3.0 (2022-12) "3rd Generation Partnership Project; Technical Specification Group Radio Access Network; NR; Radio Resource Control (RRC) protocol specification (Release 17)", January 2023

### Summary of Invention

### Technical Problem

The inventor examined technologies for improving NES, particularly conditional handover enhancements for NES, and identified various problems. In this specification, the term "conditional handover" refers not only to conditional handovers in non-dual connectivity operation, but also to conditional Special Cell (SpCell) changes in dual connectivity operation. In dual connectivity operation, the SpCell is either the Primary Cell (PCell) of the Master Cell Group (MCG) or the Primary SCG cell (PSCell) of a Secondary Cell Group (SCG). The SpCell supports PUCCH transmission and contention-based random access. From this perspective, a conditional handover can be rephrased as a conditional reconfiguration or conditional mobility. A conditional handover can be either an intra-Radio Access Network (RAN) node (e.g., gNB) conditional handover or an inter-RAN node conditional handover. In other words, in a conditional handover, the source cell and one or more candidate target cells may be provided by a single RAN node (e.g., gNB) or by different RAN nodes.

One of the problems identified by the inventor relates to the trigger for CHO execution. As described above, Non-Patent Literature 3 to 7 propose using the reception of the source cell's NES mode indication by a UE as a trigger or condition for executing a CHO. However, using the reception of the source cell's NES mode indication by UEs (in particular, cell-common signaling or UE group-common signaling) as a trigger for CHO execution may result in some or all of these UEs performing handover to a particular target cell simultaneously. This could increase the processing load on the particular target cell.

Another one of the problems identified by the inventor relates to reducing the signaling load for NES. In order to reduce the signaling load, it may be desirable to unify the signaling for indicating the NES mode change of the source cell to UEs supporting NES and the signaling for prohibiting access to the cell by UEs not supporting NES. As another approach to reducing the signaling overhead, it may be desirable to reduce the amount of signaling for simultaneously configuring a UE with both a normal CHO and a CHO for NES.

A further problem identified by the inventor relates to the details of a conditional handover procedure for NES. For example, the details of a CHO procedure are unclear in cases where a SI change or modification mechanism is used to notify UEs of a source cell's NES mode change.

One of the objects to be achieved by the example embodiments disclosed herein is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

In a first aspect, a radio terminal includes at least one memory and at least one processor coupled to the at least one memory. The at least one processor is configured to receive a first message containing configuration information for a conditional handover. The at least one processor is configured to execute the conditional handover on a condition that a first threshold time period has expired, after receiving a first signal regarding low activity of a source cell of the conditional handover, following reception of the first message.

In a second aspect, a method performed by a radio terminal includes: (a) receiving a first message containing configuration information for a conditional handover; and (b) executing the conditional handover on a condition that a first threshold time period has expired, after receiving a first signal regarding low activity of a source cell of the conditional handover, following reception of the first message.

In a third aspect, a RAN node includes at least one memory and at least one processor coupled to the at least one memory. The at least one processor is configured to transmit a first message containing configuration information for a conditional handover to a radio terminal. The configuration information causes the radio terminal to execute the conditional handover on a condition that a first threshold time period has expired, after receiving a first signal regarding low activity of a source cell of the conditional handover, following reception of the first message.

In a fourth aspect, a method performed by a RAN node includes transmitting a first message containing configuration information for a conditional handover to a radio terminal. The configuration information causes the radio terminal to execute the conditional handover on a condition that a first threshold time period has expired, after receiving a first signal regarding low activity of a source cell of the conditional handover, following reception of the first message.

In a fifth aspect, a radio terminal includes at least one memory and at least one processor coupled to the at least one memory. The at least one processor is configured to receive a first message containing configuration information for a conditional handover and to execute the conditional handover on a condition that a first signal is further received after receiving the first message. The first signal is layer 1 signaling that includes an indication of a change in system information in a source cell of the conditional handover and further includes an indication of low activity of the source cell. The change in the system information includes a change in the system information to indicate that access to the source cell by a radio terminal that does not support NES is barred.

In a sixth aspect, a method performed by a radio terminal includes: (a) receiving a first message containing configuration information for a conditional handover; and (b) executing the conditional handover on a condition that a first signal is further received after receiving the first message. The first signal is layer 1 signaling that includes an indication of a change in system information in a source cell of the conditional handover and further includes an indication of low activity of the source cell. The change in the system information includes a change in the system information to indicate that access to the source cell by a radio terminal that does not support NES is barred.

In a seventh aspect, a RAN node includes at least one memory and at least one processor coupled to the at least one memory. The at least one processor is configured to transmit a first message containing configuration information for a conditional handover to a radio terminal. The configuration information causes the radio terminal to execute the conditional handover on a condition that a first signal is further received after receiving the first message. The first signal is layer 1 signaling that includes an indication of a change in system information in a source cell of the conditional handover and further includes an indication of low activity of the source cell. The change in the system information includes a change in the system information to indicate that access to the source cell by a radio terminal that does not support NES is barred.

In an eighth aspect, a method performed by a RAN node includes transmitting a first message containing configuration information for a conditional handover to a radio terminal. The configuration information causes the radio terminal to execute the conditional handover on a condition that a first signal is further received after receiving the first message. The first signal is layer 1 signaling that includes an indication of a change in system information in a source cell of the conditional handover and further includes an indication of low activity of the source cell. The change in the system information includes a change in the system information to indicate that access to the source cell by a radio terminal that does not support NES is barred.

In a ninth aspect, a radio terminal includes at least one memory and at least one processor coupled to the at least one memory. The at least one processor is configured to receive a first message containing configuration information for a conditional handover, and to further receive, after receiving the first message, layer 1 signaling including an indication of a change in system information in a source cell of the conditional handover. The at least one processor is configured to start evaluating one or more execution conditions for the conditional handover in a next system information modification period that follows a system information modification period during which the layer 1 signaling is received.

In a tenth aspect, a method performed by a radio terminal includes the steps of:
(a) receiving a first message containing configuration information for a conditional handover;
(b) after receiving the first message, further receiving layer 1 signaling including an indication of a change in system information in a source cell of the conditional handover; and
(c) starting evaluating one or more execution conditions for the conditional handover in a next system information modification period that follows a system information modification period during which the layer 1 signaling is received.

In an eleventh aspect, a RAN node includes at least one memory and at least one processor coupled to the at least one memory. The at least one processor is configured to transmit a first message containing configuration information for a conditional handover to a radio terminal. The configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

In a twelfth aspect, a method performed by a RAN node includes transmitting a first message containing configuration information for a conditional handover to a radio terminal. The configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

In a thirteenth aspect, a radio terminal includes at least one memory and at least one processor coupled to the at least one memory. The at least one processor is configured to receive a first message containing configuration information for a conditional handover and to evaluate an execution condition for the conditional handover based on the configuration information. The configuration information includes a first set of one or more execution conditions and a second set of one or more execution conditions, associated with a same candidate target cell configuration. The first set relates to a first type of conditional handover that does not require, in order for its execution to be triggered, a first signal regarding low activity of a source cell of the conditional handover to be received by the radio terminal after the first message is received. The second set relates to a second type of conditional handover that requires, in order for its execution to be triggered, the first signal to be received by the radio terminal after the first message is received.

In a fourteenth aspect, a method performed by a radio terminal includes: (a) receiving a first message containing configuration information for a conditional handover; and (b) evaluating an execution condition for the conditional handover based on the configuration information. The configuration information includes a first set of one or more execution conditions and a second set of one or more execution conditions, associated with a same candidate target cell configuration. The first set relates to a first type of conditional handover that does not require, in order for its execution to be triggered, a first signal regarding low activity of a source cell of the conditional handover to be received by the radio terminal after the first message is received. The second set relates to a second type of conditional handover that requires, in order for its execution to be triggered, the first signal to be received by the radio terminal after the first message is received.

In a fifteenth aspect, a RAN node comprises at least one memory and at least one processor coupled to the at least one memory. The at least one processor is configured to transmit a first message containing configuration information for a conditional handover to a radio terminal. The configuration information includes a first set of one or more execution conditions and a second set of one or more execution conditions, associated with a same candidate target cell configuration. The first set relates to a first type of conditional handover that does not require, in order for its execution to be triggered, a first signal regarding low activity of a source cell of the conditional handover to be received by the radio terminal after the first message is received. The second set relates to a second type of conditional handover that requires, in order for its execution to be triggered, the first signal to be received by the radio terminal after the first message is received.

In a sixteenth aspect, a method performed by the RAN node includes transmitting a first message containing configuration information for a conditional handover to a radio terminal. The configuration information includes a first set of one or more execution conditions and a second set of one or more execution conditions, associated with a same candidate target cell configuration. The first set relates to a first type of conditional handover that does not require, in order for its execution to be triggered, a first signal regarding low activity of a source cell of the conditional handover to be received by the radio terminal after the first message is received. The second set relates to a second type of conditional handover that requires, in order for its execution to be triggered, the first signal to be received by the radio terminal after the first message is received.

In a seventeenth aspect, a program includes a set of instructions (software code) that, when loaded into a computer, causes the computer to perform the method according to the second, fourth, sixth, eighth, tenth, twelfth, fourteenth, or sixteenth aspect described above.

### Advantageous Effects of Invention

According to the aspects described above, it is possible to provide apparatuses, methods, and programs that contribute to solving at least one of a plurality of problems, including the problems described above.

### Brief Description of Drawings

Fig. 1 is a diagram showing an example configuration of a radio communication system related to one or more example embodiments;
Fig. 2 is a diagram showing an example configuration of a radio communication system related to one or more example embodiments;
Fig. 3 is a diagram showing an example configuration of a radio communication system related to one or more example embodiments;
Fig. 4 is a diagram showing a conditional handover operation related to one or more example embodiments;
Fig. 5 is a diagram showing a conditional handover operation related to one or more example embodiments;
Fig. 6 is a diagram showing a conditional handover operation related to one or more example embodiments;
Fig. 7 is a diagram showing a conditional handover operation related to one or more example embodiments;
Fig. 8 is a diagram showing a conditional handover operation related to one or more example embodiments;
Fig. 9 is an example of a format of a CondReconfigToAddModList information element related to one or more example embodiments;
Fig. 10 is a block diagram showing an example configuration of a RAN node related to one or more example embodiments; and
Fig. 11 is a block diagram showing an example configuration of a UE related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are described with respect to the 3GPP 5th generation mobile communication system (5G system) and its evolution. However, these example embodiments can also be applied to other radio communication systems that support a conditional handover similar to that of the 3GPP system.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

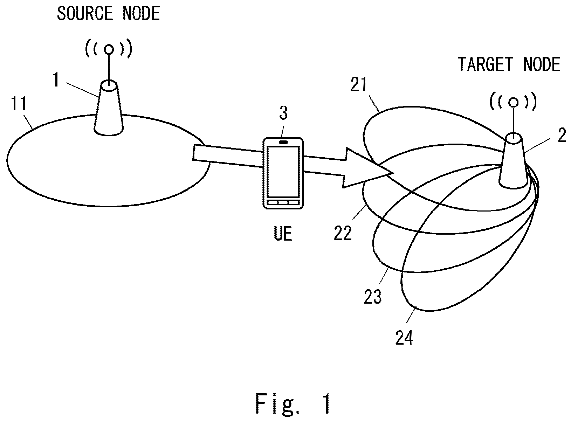

First, the configuration and operation of a plurality of network elements common to a plurality of example embodiments are described. Fig. 1 shows an example configuration of a radio communication system related to a plurality of example embodiments. In the example shown in Fig. 1, the radio communication system includes a RAN node 1, a RAN node 2, and a UE 3. The UE 3 may be referred to as a radio terminal 3. Each element (network function) shown in Fig. 1 may be implemented, for example, as a network element on dedicated hardware, as a software instance running on dedicated hardware, or as a virtualized function instantiated on an application platform.

The RAN node 1 may be a Central Unit (e.g., gNB-CU) in a cloud RAN (C-RAN) deployment, or a combination of a CU and one or more Distributed Units (e.g., gNB-DUs). C-RAN is also referred to as CU/DU split. Additionally, the CU may include a Control Plane (CP) Unit (e.g., gNB-CU-CP) and one or more User Plane (UP) Units (e.g., gNB-CU-UP). Accordingly, the RAN node 1 may be a CU-CP or a combination of a CU-CP and a CU-UP. Similarly, the RAN node 2 may be a CU or a combination of a CU and one or more DUs. The RAN node 2 may be a CU-CP or a combination of a CU-CP and a CU-UP.

Each of the RAN nodes 1 and 2 may be a Next Generation Radio Access Network (NG-RAN) node. An NG-RAN node may be a gNB or an ng-eNB. An ng-eNB provides E-UTRA user plane and control plane protocol termination to a UE and is connected to a 5GC via an NG interface. The radio access technology (RAT) of the RAN node 1 may differ from that of the RAN node 2.

The RAN node 1 provides at least one cell 11. The RAN node 2 provides one or more cells (e.g., four cells 21 to 24). In the example shown in Fig. 1, the cell 11 provided by the RAN node 1 is a current serving cell for the UE 3, and the UE 3 is handed over from the cell 11 to one of the cells provided by the RAN node 2. Accordingly, in the following, the RAN node 1 is referred to as the source node or source RAN node, and the RAN node 2 is referred to as the target node or target RAN node. The cell 11 is referred to as the source cell. The cells 21 to 24 are referred to as target cells or candidate target cells. The source node 1, the target node 2, and the UE 3 support a conditional handover (CHO). A CHO is a handover procedure that is executed only if one or more configured CHO execution conditions are met. Although not shown in Fig. 1, multiple candidate target cells provided by multiple candidate target nodes 2 may be prepared for a CHO.

In a CHO procedure, the UE 3 receives configuration information for the CHO (hereinafter referred to as CHO configuration) from the source node 1. A CHO configuration includes configurations of one or more candidate target cells, which are prepared by one or more candidate target nodes, as well as the configurations of one or more CHO execution conditions that are associated with each candidate target cell.

Each candidate target cell configuration is generated by the candidate target node (e.g., target node 2) that provides (or prepares) this candidate target cell. Each candidate target cell configuration may be a radio bearer (RB) configuration, a radio resource configuration, an RRC reconfiguration message, or any combination thereof, generated by the candidate target node (e.g., target node 2) that provides (or prepared) the candidate target cell.

On the other hand, a CHO execution condition is generated by the source node 1. A CHO execution condition may be composed of one or more trigger conditions. A condition or criterion that triggers a CHO event may be similar to that for a measurement report event, and may be, for example, CondEvent A3, CondEvent A4, or CondEvent A5. The UE 3 evaluates CHO execution condition(s). If the execution condition(s) of a candidate target cell is met, the UE 3 executes a conditional reconfiguration (CHO in this case) by applying the configuration of this candidate target cell. Specifically, the UE 3 detaches from the source node 1, applies the configuration corresponding to the selected candidate target cell (i.e., the candidate target cell whose execution condition(s) is met) and synchronizes with the selected candidate target cell. If the execution conditions of two or more candidate target cells are satisfied, the UE 3 may select one of those candidate target cells and perform the above operation.

A CHO configuration may be a conditionalReconfiguration Information Element (IE) or field contained in an RRC reconfiguration message. The term "information element (IE)" used in this specification may be referred to as "field". The configuration of the conditionalReconfiguration IE and its handling by the UE are described in clauses 5.3.5.13 and 6.3.2 of 3GPP TS 38.331 (Non-Patent Literature 8). The conditionalReconfiguration IE can contain a condReconfigToAddModList IE. The condReconfigToAddModList IE relates to a list of conditional reconfigurations (e.g., CHO) to be added or modified, and for each entry, it contains a condReconfigId IE, as well as a condExecutionCond IE and a condRRCReconfig IE associated therewith. The condExecutionCond IE indicates one or more execution conditions that need to be fulfilled in order to trigger the execution of a conditional reconfiguration (e.g., CHO). The condRRCReconfig IE is a candidate target cell configuration, specifically an RRC Reconfiguration message, which is applied in a case where one or more associated execution conditions are met.

The CHO shown in Fig. 1 may be an intra-RAN node conditional handover. In this case, the source node 1 and the target node 2 may be the same RAN node (e.g., gNB). The source node 1 may correspond to a gNB-CU and a source gNB-DU, and the target node 2 may correspond to the same gNB-CU and a target gNB-DU.

The CHO shown in Fig. 1 may be a conditional handover within (intra-MN) or between (inter-MN) master nodes (MN) in dual connectivity operation. An intra-MN or inter-MN conditional handover may be referred to as a conditional PCell change. The CHO shown in Fig. 1 may be a conditional change from a master node to a gNB or a conditional change from a gNB to a master node.

As described above, the term "conditional handover (CHO)" used in this specification may refer to conditional PSCell change (CPC) during dual connectivity operation. CPC includes intra-SN CPC and inter-SN CPC. Intra-SN CPC may be referred to as conditional SN modification. The following describes intra-SN CPC and inter-SN CPC.

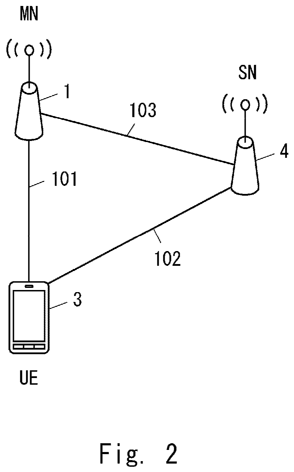

Fig. 2 shows another example configuration of a radio communication system related to a plurality of example embodiments. In the example of Fig. 2, the radio communication system includes a RAN node 1, a RAN node 4, and a UE 3. Each element (network function) shown in Fig. 2 may be implemented, for example, as a network element on dedicated hardware, as a software instance running on dedicated hardware, or as a virtualized function instantiated on an application platform. The RAN node 1, the RAN node 4, and the UE 3 in the example of Fig. 2 may have the same configurations and functions as the RAN node 1, the RAN node 2, and the UE 3 in the example of Fig. 1.

The RAN node 1 and the RAN node 4 communicate with each other via an inter-node interface (e.g., Xn interface) 103. The RAN node 1 and the RAN node 4 operate as an MN and an SN, respectively, in dual connectivity. The UE 3 communicates with the MN 1 and the SN 2 via air interfaces 101 and 102, and performs dual connectivity with an MCG and an SCG. This dual connectivity may be Multi-Radio Dual Connectivity (MR-DC).

The RAN node 4 and the UE 3 support intra-SN CPC. Intra-SN CPC may be referred to as SN-initiated conditional SN modification without MN involvement. Intra-SN CPC is an intra-SN PSCell change procedure that is executed only if a CPC execution condition is met.

In an intra-SN CPC procedure, the UE 3 receives from the SN 4 configurations of one or more candidate (target) PSCell configurations, which are prepared by the SN 4, as well as one or more associated CPC execution conditions. Each candidate PSCell configuration and associated CPC execution condition(s) are contained in a CPC configuration for intra-SN CPC. The SN 4 may send these to the UE 3 via the MN 1, or may send them to the UE 3 via a direct signaling radio bearer (e.g., Signaling Radio Bearer 3 (SRB3)) between the SN 4 and the UE 3.

Each candidate PSCell configuration includes at least configuration information for a candidate PSCell. Each candidate PSCell configuration may further include configuration information for one or more SCells associated with (i.e., configured together with or in association with) the candidate PSCell. Each candidate PSCell configuration may be a radio bearer (RB) configuration, a cell group (CG) configuration, an SCG configuration, an SCG radio resource configuration, or any combination thereof. Specifically, each candidate PSCell configuration may be an RRC reconfiguration message generated by the SN 4 (hereinafter referred to as an SN RRC reconfiguration message).

A CPC execution condition for an intra-SN CPC may be composed of one or more trigger conditions. A condition or criterion that triggers a CPC event may be similar to that for a measurement reporting event, and may be, for example, CondEvent A3, CondEvent A4, or CondEvent A5. The UE 3 evaluates CPC execution conditions. If the execution condition(s) of a candidate PSCell are met, the UE 3 detaches from the source PSCell, applies the configuration corresponding to the selected candidate PSCell (i.e., the candidate PSCell whose execution condition(s) are met), and synchronizes with the selected candidate PSCell. If the execution conditions of two or more candidate PSCells are satisfied, the UE 3 may select one of those candidate PSCells and perform the above operation.

A CPC configuration for intra-SN CPC may be a conditionalReconfiguration IE contained in an SN RRC Reconfiguration message. The conditionalReconfiguration IE can contain a condReconfigToAddModList IE. The condReconfigToAddModList IE relates to a list of conditional reconfigurations (e.g., intra-SN CPC) to be added or modified, and for each entry, it contains a condReconfigId IE, as well as a condExecutionCond IE and a condRRCReconfig IE associated therewith. The condExecutionCond IE indicates one or more execution conditions that need to be fulfilled in order to trigger the execution of a conditional reconfiguration (e.g., intra-SN CPC). The condRRCReconfig IE is a candidate target cell configuration, specifically an RRC Reconfiguration message, which is applied in a case where one or more associated execution conditions are met.

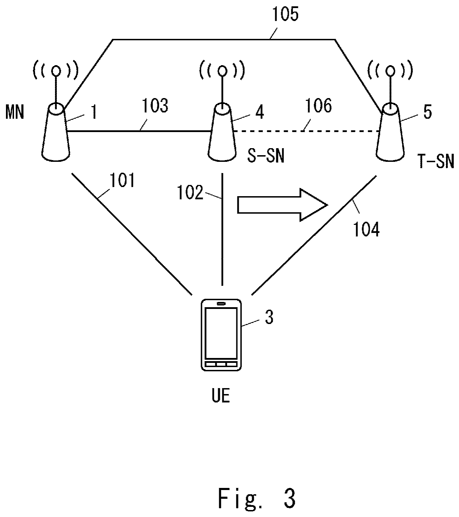

Fig. 3 shows an example configuration of a radio communication system related to a plurality of example embodiments. In the example of Fig. 3, the radio communication system includes a RAN node 1, a RAN node 4, a RAN node 5, and a UE 3. Each element (network function) shown in Fig. 2 may be implemented, for example, as a network element on dedicated hardware, as a software instance running on dedicated hardware, or as a virtualized function instantiated on an application platform. The RAN node 1, the RAN node 4, the RAN node 5, and the UE 3 in the example of Fig. 3 may have the same configurations and functions as the RAN node 1, the RAN node 2, and the UE 3 in the example of Fig. 1.

The RAN node 1 and the RAN node 4 communicate with each other via an inter-node interface (e.g., Xn interface) 103. The RAN node 1 and the RAN node 4 operate as an MN and an SN, respectively, in dual connectivity. Additionally, the RAN node 1 and the RAN node 5 communicate with each other via an inter-node interface (e.g., Xn interface) 105. The RAN node 1 and the RAN node 5 can operate as an MN and an SN, respectively, in dual connectivity. An inter-node interface (e.g., Xn interface) 106 may be configured between the RAN node 4 and the RAN node 5.

The RAN nodes 1, 4, and 5, and the UE 3 support inter-SN CPC from an SCG provided by the RAN node 4 to an SCG provided by the RAN node 5. Accordingly, in the following, the RAN node 1 may be referred to as MN 1, the RAN node 4 may be referred to as source SN (S-SN) 4, and the RAN node 5 may be referred to as target SN (T-SN) 5, candidate SN 5, or target candidate SN 5. Inter-SN CPC may be referred to as conditional SN change.

Inter-SN CPC (or conditional SN change) is an inter-SN PSCell change procedure (or SN change procedure) that is executed only if one or more CPC execution conditions are met or satisfied. The UE 3 maintains the connection with the source SN 4 and source SCG even after receiving an SN change instruction from the MN 1, and starts evaluating the execution conditions configured by the instruction. Then, in response to an execution condition being met, the UE 3 starts accessing a target candidate SN 4 and a selected candidate PSCell.

Inter-SN CPC can be initiated by the MN 1 or the source SN 4. Inter-SN CPC initiated by the MN 1 is referred to as MN initiated inter-SN CPC. On the other hand, inter-SN CPC initiated by the source SN 4 is referred to as SN initiated inter-SN CPC. In MN-initiated inter-SN CPC, the MN 1 generates a CPC execution condition. In contrast, in SN-initiated inter-SN CPC, the source SN 4 generates a CPC execution condition and sends it to the MN 1. In both MN-initiated inter-SN CPC and SN-initiated inter-SN CPC, the target candidate SN 5 generates an SCG configuration and sends it to the MN. The MN 1 then transmits a CPC configuration (e.g., ConditionalReconfiguration IE) containing the CPC execution condition and the SCG configuration to the UE 3 via an RRC Reconfiguration message.

Although not shown in Fig. 3, multiple candidate cells (i.e., candidate PSCells) provided by multiple candidate SNs 5 may be prepared for an inter-SN CPC. In an inter-SN CPC procedure, the UE 3 receives from the MN 1 configurations of one or more candidate PSCells prepared by one or more candidate SNs (i.e., one or more SCG configurations) and one or more CPC execution conditions associated therewith.

A CPC configuration for inter-SN CPC may be a conditionalReconfiguration IE contained in an RRC reconfiguration message generated by the MN 1 (hereinafter referred to as an MN RRC reconfiguration message). The conditionalReconfiguration IE can contain a condReconfigToAddModList IE. The condReconfigToAddModList IE relates to a list of conditional reconfigurations (e.g., inter-SN CPC) to be added or modified, and for each entry, it contains a condReconfigId, as well as a condExecutionCond IE (or condExecutionCondSCG IE) and a condRRCReconfig IE associated therewith. The condExecutionCond IE is included in each entry in the case of MN-initiated inter-SN CPC and indicates one or more execution conditions generated by the MN 1 that need to be fulfilled in order to trigger the execution of a conditional reconfiguration (e.g., inter-SN CPC). The condExecutionCondSCG IE is included in each entry in the case of SN-initiated inter-SN CPC and indicates one or more execution conditions generated by the source SN 4 that need to be fulfilled in order to trigger the execution of a conditional reconfiguration (e.g., inter-SN CPC). The condRRCReconfig IE is a candidate target cell configuration, specifically an SN RRC Reconfiguration message, which is applied in a case where one or more associated execution conditions are met.

The RAN nodes 1, 2, 4, and 5, and the UE 3 described with reference to Figs. 1 to 3 support enhancements for network energy savings (NES) described in the Background Art section of this specification. Specifically, the RAN nodes 1, 2, 4, and 5, and the UE 3 may support one or more of the various techniques in the time domain, frequency domain, spatial domain, and power domain described in the Background Art section to improve network energy saving. Additionally, the RAN nodes 1, 2, 4, and 5, and the UE 3 support an enhanced CHO that takes switching to the NES mode of the source cell into account. As understood from the above description, this CHO may be an intra-MN or inter-MN conditional PCell change, a conditional change from a master node to a gNB, a conditional change from a gNB to a master node, an intra-SN conditional PSCell change, or an inter-SN conditional PSCell change.

In this specification, the terms "NES cell" and "NES mode" may refer to an operating mode or state in which power consumption is reduced by using one or more of the various technologies for improving NES described above, or by using other technologies, or may refer to a cell in such an operating mode or state. The terms "NES cell" and "NES mode" may be replaced by other similar terms. For example, these may be replaced with terms such as NES state or period; low activity cell, mode, state, or period; inactive cell, mode, state, or period; deactivated/deactivation cell, mode, state, or period; or sleep cell, mode, state, or period.

To indicate low activity of the source cell of a CHO to one or more UEs, a RAN node (e.g., RAN node 1 or 4) may transmit a first signal. The first signal may be transmitted by the RAN node that provides the source cell (e.g., RAN node 1 in Fig. 1, RAN node 4 in Figs. 2 and 3) in response to the source cell being changed to the NES mode. In the examples of Fig. 2 and Fig. 3, the first signal may be transmitted by the MN 1. The first signal may be transmitted in advance to notify the change to the NES mode before the source cell dynamically changes to the NES mode. Alternatively, the first signal may be transmitted simultaneously with or after the source cell dynamically changes to the NES mode.

The first signal may include an indication of low activity of the source cell. This indication may be referred to, for example, without limitation, as NES indication, NES mode indication, NES state indication, cell low activity indication, low activity mode indication, low activity state indication, cell inactive indication, inactive mode indication, inactive state indication, cell sleep indication, sleep mode indication, or sleep state indication. The first signal or NES mode indication may indicate the activation of cell DTX or cell DRX or both.

The first signal may be L2 signaling (e.g., MAC CE), dedicated L1 signaling (e.g., dedicated DCI), or common L1 signaling (e.g., group common DCI). As will be explained in detail later, if the first signal is Layer 1 signaling, it may also serve the role of indicating a change or modification of system information. In other words, the first signal may be a DCI containing a short message indicating a change in system information, or a PDCCH carrying that DCI and Cyclic Redundancy Check (CRC) bits scrambled by a Paging Radio Network Temporary Identifier (P-RNTI). In addition to the short message indicating a change in system information, the DCI may also indicate a short message indicating the NES mode indication.

Alternatively, the first signal may be broadcast RRC signaling (e.g., system information) or dedicated RRC signaling (e.g., RRC Reconfiguration). The system information may be, for example, SIB Type 1 (SIB1), SIB2, or another SIB.

### First Example Embodiment

The present example embodiment provides an improved CHO operation. An example configuration of a radio communication system according to the present example embodiment may be the same as any of the example configurations described with reference to Figs. 1 to 3.

In this example embodiment, the UE 3 operates to receive a first message containing configuration information for a CHO. The configuration information for a CHO corresponds to a CHO configuration or a CPC configuration described above. The first message may be an RRC message, more specifically, an RRC Reconfiguration message. In the CHO described with reference to the example configuration in Fig. 1, the first message (e.g., an RRC Reconfiguration message) is sent from the source node 1 to UE 3. In the intra-SN CPC described with reference to the example configuration shown in Fig. 2, the first message (e.g., an SN RRC Reconfiguration message) is sent from the SN 4 to the UE 3, either directly or via the MN 1. In the inter-SN CPC described with reference to the example configuration shown in Fig. 3, the first message (e.g., an MN RRC Reconfiguration message) is sent from the MN 1 to the UE 3.

Additionally, the UE 3 operates to execute the CHO on a condition that a first threshold time period has elapsed, after receiving a first signal regarding low activity of the source cell of the CHO, following reception of the first message. The UE 3 may measure the first threshold time period and detect the expiration of the first threshold time period. The UE 3 may start measuring the first threshold time period in response to receiving the first signal. In other words, the first threshold time period may be measured from the reception of the first signal. Alternatively, the UE 3 may start measuring the first threshold time period after receiving the first signal. The UE 3 may start measuring the first threshold time period from a given point in time after receiving the first signal. In an implementation in which a DCI indicating a change in system information is used as the first signal, the given point in time may be the beginning of the next system information modification period following the current system information modification period during which the DCI is received.

The UE 3 may be configured with the first threshold time period via signaling from a RAN node. The configuration of the first threshold time period may be contained in the configuration information for the CHO (i.e., the CHO configuration or the CPC configuration). In the CHO described with reference to the example configuration in Fig. 1, the source node 1 may provide the configuration of the first threshold time period to the UE 3. In the intra-SN CPC described with reference to the example configuration in Fig. 2, the source SN 4 may provide the configuration of the first threshold time period to the UE 3, either directly or via the MN 1. In the inter-SN CPC described with reference to the example configuration in Fig. 3, the source SN 4 may provide the configuration of the first threshold time period to the UE 3 via the MN 1, or the MN 1 may provide it to the UE 3.

There are several implementation alternatives to enable the UE 3 to execute a CHO depending on the expiration of the first threshold time period. In the first implementation, one or more CHO execution conditions associated with a candidate target cell for a single CHO include a first condition that is satisfied due to the expiration of the first threshold time period after the reception of the first signal. These CHO execution conditions may also include a second condition related to radio quality of the associated candidate target cell. A single CHO means a conditional reconfiguration (e.g., CHO) defined in each entry of a list of conditional reconfigurations (e.g., condReconfigToAddModList IE) contained in the CHO configuration. In this implementation, the UE 3 starts evaluating the one or more CHO execution conditions, including the first condition, in response to receiving the first signal. Alternatively, the UE 3 may start evaluating the one or more CHO execution conditions, including the first condition, in response to receiving the CHO configuration or the first message including the CHO configuration. The UE 3 executes the CHO to the candidate target cell in response to the one or more CHO execution conditions being satisfied. In this way, the UE 3 can use the expiration of the first threshold time period as one of the triggers need to be satisfied for CHO execution.

In the second implementation, the UE 3 starts evaluating each CHO execution condition contained in the CHO configuration received via the first message in response to the expiration of the first threshold time period. In other words, in the second implementation, the UE 3 delays the start of the evaluation of the execution condition(s) of a NES type CHO until the expiration of the first threshold time period. A normal type CHO is an existing CHO, meaning that it does not require, in order for its execution to be triggered, the first signal indicating low activity of the source cell to be received by the UE 3. In other words, a normal type CHO is a CHO whose execution is triggered regardless of the reception of the first signal or the expiration of the first threshold time period. In contrast, a NES type CHO requires, in order for its execution to be triggered, the first signal indicating low activity of the source cell to be further received by the UE 3 after the reception of the first message. A NES type CHO may require the expiration of the first threshold time period after the reception of the first signal by the UE 3 in order for its execution to be triggered. A normal type CHO may be referred to by other names, such as a legacy CHO. A NES type CHO may be referred to by other names, such as a delayed-evaluation-type CHO.

According to the operation of the UE 3 described in this example embodiment, the UE 3 uses not the reception of a signal or indication regarding the NES mode of the source cell itself, but the expiration of a threshold time period after the reception of that first signal or indication as a trigger for executing CHO. The network (e.g., the RAN node 1 or 4) may configure different threshold time periods for different UEs. For example, this helps avoid a situation in which many UEs perform handovers to the same particular target cell substantially simultaneously in a case where the first signal or indication is cell-common or UE-common signaling.

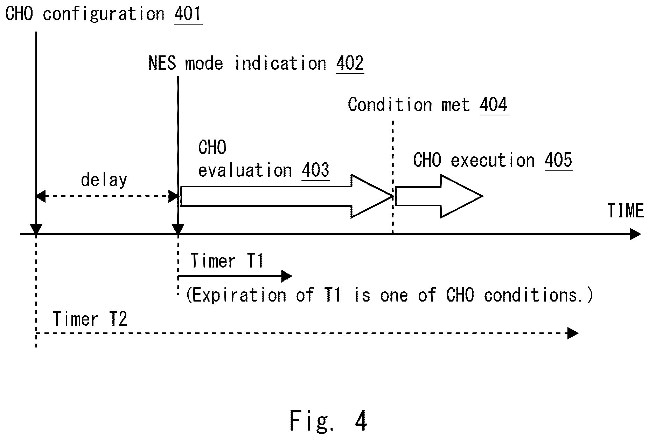

Fig. 4 shows a first example of a CHO operation performed by the UE 3. The example in Fig. 4 relates to the first implementation described above, in which the UE 3 takes into account the expiration of the first threshold time period before executing the CHO. The UE 3 starts (step 403) evaluating the CHO execution condition(s) in response to receiving (step 402) the NES mode indication (or the first signal) of the source cell after receiving (step 401) the CHO configuration (or the first message). The CHO execution condition(s) include the first condition, which is satisfied by the expiration of the first threshold time period after the NES mode indication (or the first signal) is received. In response to receiving the NES mode indication (or the first signal), the UE 3 starts timer T1 to measure the first threshold time. If the one or more CHO execution conditions, including the first condition, are satisfied (step 404), the UE 3 executes (step 405) the CHO by applying the configuration of the candidate target cell associated with the satisfied execution condition(s).

As shown in Fig. 4, the UE 3 may optionally start a timer T2 in response to receiving (step 401) the CHO configuration (or the first message). The timer T2 measures a second threshold time period. The second threshold time period may be configured in the UE 3 by the network (e.g., the RAN node 1 or 4). The configuration of the second threshold time period may be included in the CHO configuration (step 401). The UE 3 may terminate the associated conditional handover without executing it in response to the expiration of the timer T2 (or the second threshold time period) after receiving the first message or the CHO configuration, before the execution of the conditional handover is triggered. Alternatively, the UE 3 may terminate the associated conditional handover without executing it in response to the passage of a given moment in time after receiving the first message or the CHO configuration, before the execution of the conditional handover is triggered. The given moment in time may be configured in the UE 3 by the network (e.g., the RAN node 1 or 4).

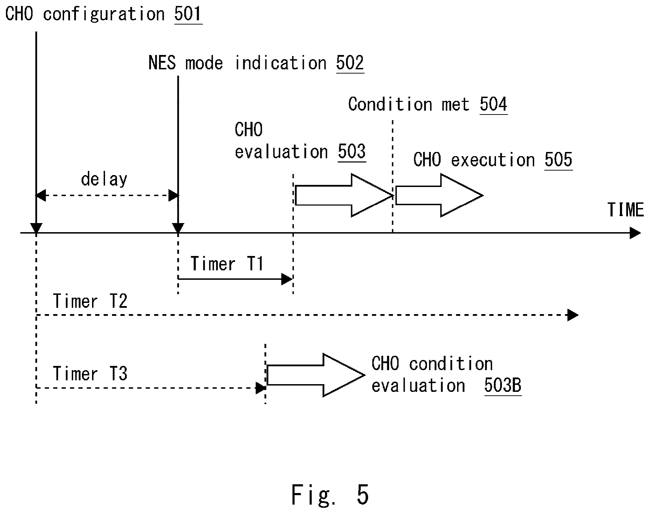

Fig. 5 shows a second example of a CHO operation performed by the UE 3. The example in Fig. 5 relates to the second implementation described above, in which the UE 3 takes into account the expiration of the first threshold time period before executing the CHO. The UE 3 starts a timer T1 for measuring the first threshold time period in response to receiving (step 502) the NES mode indication (or the first signal) of the source cell after receiving (step 501) the CHO configuration (or the first message). Then, in response to the expiration of the timer T1 (or the first threshold time period), the UE 3 starts (step 503) evaluating the CHO execution condition. In this case, the CHO execution condition(s) do not include the first condition that is satisfied by the expiration of the first threshold time period. If the CHO execution condition(s) are satisfied (step 504), the UE 3 executes (step 505) the CHO by applying the configuration of the candidate target cell associated with the satisfied execution condition(s).

In the operation shown in Fig. 5, as described with reference to Fig. 4, the UE 3 may optionally start a timer T2 in response to receiving (step 501) the CHO configuration (or the first message). The UE 3 may terminate the associated conditional handover without executing it in response to the expiration of the timer T2 (or the second threshold time period) after receiving the first message or the CHO configuration, before the execution of the conditional handover is triggered. Alternatively, the UE 3 may terminate the associated conditional handover without executing it in response to the passage of a given moment in time after receiving the first message or the CHO configuration, before the execution of the conditional handover is triggered.

In the operation shown in Fig. 5, the UE 3 may optionally start a timer T3 in response to receiving (step 501) the CHO configuration (or the first message). The timer T3 measures a third threshold time period. The third threshold time period may be configured in the UE 3 by the network (e.g., the RAN node 1 or 4). The configuration of the third threshold time period may be included in the CHO configuration (step 501). The UE 3 may start evaluating the handover execution condition(s) in response to the expiration of the timer T1 (or the first threshold time period) after receiving the NES mode indication (or the first signal) (step 503) or the expiration of the timer T3 (or the third threshold time period) after receiving the CHO configuration (or the first message) (step 503B), whichever occurs first.

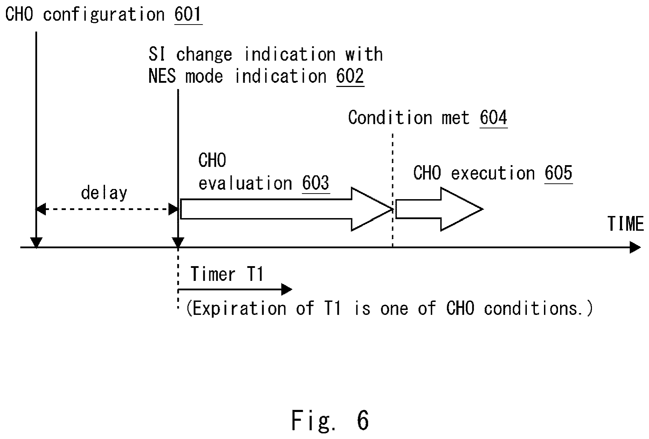

Fig. 6 shows a third example of a CHO operation performed by the UE 3. Fig. 6 shows a more specific example of the example shown in Fig. 4. In the example shown in Fig. 6, layer 1 signaling (i.e., DCI) indicating a change or modification of system information is used to send the NES mode indication to the UE 3. The UE 3 starts (step 603) evaluating the CHO execution condition(s) in response to receiving an SI change indication accompanied by the NES mode indication after receiving (step 601) the CHO configuration (or the first message). The CHO execution condition(s) include the first condition, which is satisfied by the expiration of the first threshold time period after the NES mode indication (or the first signal) is received. In response to receiving the NES mode indication (or the first signal), the UE 3 starts timer T1 to measure the first threshold time. If the CHO execution condition(s), including the first execution condition, are satisfied (step 604), the UE 3 executes (step 605) the CHO by applying the configuration of the candidate target cell associated with the satisfied execution condition(s).

In the operation shown in Fig. 6, as described with reference to Fig. 4, the UE 3 may optionally start a timer T2 in response to receiving (step 601) the CHO configuration (or the first message). The UE 3 may terminate the associated conditional handover without executing it in response to the expiration of the timer T2 (or the second threshold time period) after receiving the first message or the CHO configuration, before the execution of the conditional handover is triggered. Alternatively, the UE 3 may terminate the associated conditional handover without executing it in response to the passage of a given moment in time after receiving the first message or the CHO configuration, before the execution of the conditional handover is triggered.

The CHO operation shown in Fig. 6 may be modified so that the UE 3 starts evaluating the CHO execution condition(s) in response to the expiration of the timer T1 (or the first threshold time period). In other words, in the CHO operation described with reference to Fig. 5, the SI change indication may be used as the NES mode indication (502). In this case, the CHO execution condition(s) do not include the first condition that is satisfied by the expiration of the first threshold time period.

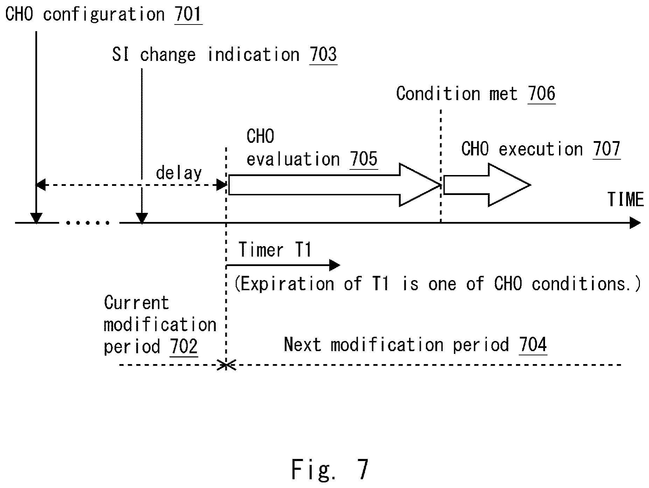

Fig. 7 shows a third example of a CHO operation performed by the UE 3. Fig. 7 shows a more specific example of the example shown in Fig. 4. After receiving (step 701) the CHO configuration (or the first message), the UE 3 receives (step 703) an SI change indication (i.e., DCI) during the current system information modification period (702). Based on the reception of the SI change indication, the UE 3 recognizes that the system information will be changed or updated during the next system information modification period (704). During the next system information modification period (704), the UE 3 receives and reads the updated system information (e.g., SIB1) and recognizes that the source cell has changed or will change to the NES mode. The updated system information explicitly or implicitly includes an indication of the NES mode of the source cell. The updated system information may explicitly indicate a reduction in the SSB transmission power of the source cell, which may be used as an implicit indication of the NES mode. In response to recognizing (or detecting) that the source cell has changed or will change to the NES mode, the UE 3 starts (step 705) evaluating the CHO execution condition(s). The CHO execution condition(s) include the first condition that is satisfied by the expiration of the first threshold time period after receiving the NES mode indication (in this case, the updated system information). The UE 3 starts a timer T1 to measure the first threshold time. If the CHO execution condition(s) are satisfied (step 706), the UE 3 executes (step 707) the CHO by applying the configuration of the candidate target cell associated with the satisfied execution condition(s).

In the operation shown in Fig. 7, as described with reference to Fig. 4, the UE 3 may optionally start a timer T2 in response to receiving (step 701) the CHO configuration (or the first message). The UE 3 may terminate the associated conditional handover without executing it in response to the expiration of the timer T2 (or the second threshold time period) after receiving the first message or the CHO configuration, before the execution of the conditional handover is triggered. Alternatively, the UE 3 may terminate the associated conditional handover without executing it in response to the passage of a given moment in time after receiving the first message or the CHO configuration, before the execution of the conditional handover is triggered.

The CHO operation shown in Fig. 7 may be modified so that the UE 3 starts evaluating the CHO execution condition(s) in response to the expiration of the timer T1 (or the first threshold time period). In other words, in the CHO operation described with reference to Fig. 5, the updated system information accompanied by the NES mode indication may be used as the NES mode indication (502). In this case, the CHO execution condition(s) do not include the first condition that is satisfied by the expiration of the first threshold time period.

### Second Example Embodiment

The present example embodiment relates to reducing the signaling load for NES. An example configuration of a radio communication system according to the present example embodiment may be the same as any of the example configurations described with reference to Figs. 1 to 3.

In this example embodiment, downlink layer 1 signaling (i.e., DCI) indicating a system information change is used also for the purpose of notifying NES-supporting UEs of an NES mode change of the source cell. The system information change or update performed in the next system information modification period that follows the system information modification period during which this DCI transmission is performed includes a system information change to indicate that access to the source cell by UEs that do not support NES is barred. In other words, a single downlink layer 1 signaling transmission is used to notify NES-supporting UEs of the NES mode change of the source cell, and to notify non-NES-supporting UEs of the system information change barring access to the cell. This helps reduce the signaling load for NES.

The UE 3 operates to receive a first message containing configuration information for a CHO. The configuration information for a CHO corresponds to a CHO configuration or a CPC configuration described above. The first message may be an RRC message, more specifically, an RRC Reconfiguration message. In the CHO described with reference to the example configuration in Fig. 1, the first message (e.g., an RRC Reconfiguration message) is sent from the source node 1 to UE 3. In the intra-SN CPC described with reference to the example configuration shown in Fig. 2, the first message (e.g., an SN RRC Reconfiguration message) is sent from the SN 4 to the UE 3, either directly or via the MN 1. In the inter-SN CPC described with reference to the example configuration shown in Fig. 3, the first message (e.g., an MN RRC Reconfiguration message) is sent from the MN 1 to the UE 3.

Additionally, the UE 3 operates to execute the CHO on a condition that it has received a first signal regarding low activity of the source cell of the CHO after receiving the first message. In this example embodiment, the first signal is a downlink layer 1 signaling (i.e., DCI) indicating a system information change. More specifically, the first signal is a DCI containing a short message indicating a system information change, or a PDCCH carrying that DCI and CRC bits scrambled by a P-RNTI. In addition to the short message indicating a change in system information, the DCI may also indicate a short message indicating the NES mode indication.

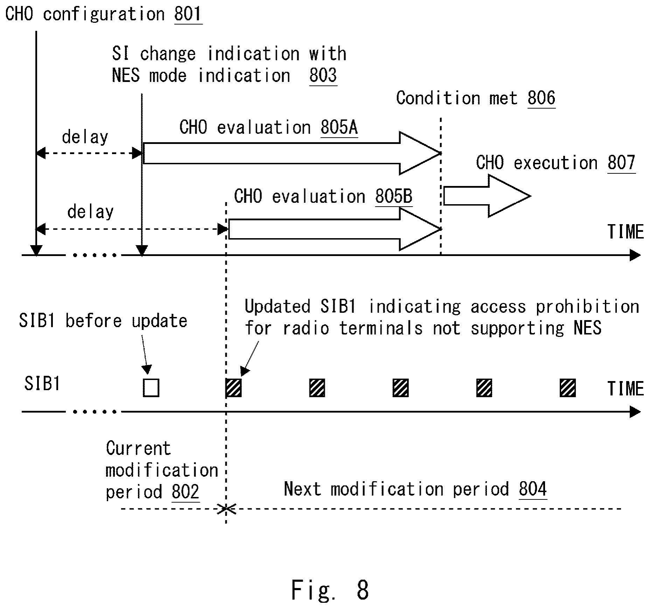

Fig. 8 shows an example of a CHO operation performed by the UE 3. In the example shown in Fig. 8, layer 1 signaling (i.e., DCI) indicating a change or modification of system information is used to send the NES mode indication to the UE 3. After receiving (step 801) the CHO configuration (or the first message), the UE 3 receives (step 803) an SI change indication accompanied by the NES mode indication during the current system information modification period (802). In an example, the UE 3 starts (step 805A) the evaluation of the CHO execution condition(s) in response to the reception of the NES mode indication. In another example, the UE 3 starts (step 805B) the evaluation of the CHO execution condition(s) in the next system information modification period (804). The UE may start evaluating the CHO execution condition(s) at the beginning of the next system information modification period (804). In the next system information modification period (804), the updated system information (e.g., SIB1 or SIB3) indicates that access is barred for UEs that do not support NES. To indicate access barring to UEs that do not support NES, for example, one or both of the IntraFreqExcludedCellList or InterFreqExcludedCellList transmitted in SIB3 may be used. Alternatively, the cellBarred or cell reservation fields transmitted in MIB or SIB1 may be used.

### Third Example Embodiment

This example embodiment provides details of a CHO procedure in a case where the SI change or modification mechanism is used to notify UEs of the NES mode change of a source cell. An example configuration of a radio communication system according to the present example embodiment may be the same as any of the example configurations described with reference to Figs. 1 to 3.

In one implementation, as in the example described with reference to Fig. 8 in the second example embodiment, in this example embodiment, the UE 3 receives (step 803) an SI change indication with a NES mode indication during the current system information modification period (802) and starts (step 805B) evaluation of the CHO execution condition(s) during the next system information modification period (804). This contributes to clarifying the CHO procedure in a case where the SI change or modification mechanism is modified and used to notify UEs of NES mode changes in the source cell.

In another implementation, the UE 3 receives an SI change indication without NES mode indication during the current system information modification period and starts evaluating the CHO execution condition(s) during the next system information modification period. More specifically, the UE 3 receives and reads the updated system information (e.g., SIB1) during the next system information modification period and recognizes (or detects) that the source cell has changed or will change to the NES mode. The updated system information explicitly or implicitly includes the NES mode indication of the source cell. In response to recognizing (or detecting) that the source cell has changed or will change to the NES mode, the UE 3 starts evaluating the CHO execution condition(s). This helps clarify the CHO procedure, in a case where the SI change or modification mechanism is used to notify UEs of the source cell's NES mode change without changing the mechanism itself.

### Fourth Example Embodiment

The present example embodiment relates to reducing the signaling load for NES. An example configuration of a radio communication system according to the present example embodiment may be the same as any of the example configurations described with reference to Figs. 1 to 3.

In this example embodiment, during configuring the UE 3 simultaneously with a normal type CHO and a NES type CHO for the same candidate target cell, the RAN node (e.g., the RAN node 1 or 4) includes two execution condition sets associated with the same candidate target cell configuration in a CHO configuration. The first set includes one or more execution conditions for the normal type CHO, while the second set includes one or more execution conditions for the NES type CHO. A normal type CHO is an existing CHO, meaning that it does not require, in order for its execution to be triggered, the first signal indicating low activity of the source cell to be received by the UE 3. In other words, a normal type CHO is a CHO whose execution condition evaluation or execution is triggered regardless of the reception of the first signal. In contrast, a NES type CHO requires, in order for its execution condition evaluation or its execution to be triggered, the first signal indicating low activity of the source cell to be further received by the UE 3 after the reception of the first message. A NES type CHO may require the expiration of the first threshold time period after the reception of the first signal by the UE 3 in order for its execution condition evaluation or its execution to be triggered. A normal type CHO may be referred to by other names, such as a legacy CHO. A NES type CHO may be referred to by other names, such as a delayed-evaluation-type CHO.

The RAN node transmits the first message (e.g., RRC Reconfiguration message) including the CHO configuration to the UE 3. In response to receiving the first message or the CHO configuration, the UE 3 starts evaluating one or more execution conditions (the first set) for the normal type CHO. The UE 3 starts evaluating one or more execution conditions (the second set) for the NES type CHO in response to receiving the first message or the CHO configuration, or in response to receiving the first signal indicating low activity of the source cell after receiving the CHO configuration, or in response to the expiration of the first threshold time period after receiving the first signal. The above operations of the RAN node (e.g., RAN node 1 or 4) and the UE 3 help reduce the amount of signaling required to configure the normal type CHO and the NES type CHO simultaneously in the UE 3. The RAN node can simultaneously configure the normal and NES types of CHO for the UE 3 by configuring the two types of CHO at the same time (e.g., in the same RRC message), but this is not the only way. For example, if the RAN node has already configured the normal type CHO for the UE 3, it may further configure the NES type CHO for the UE 3. In this case, the RAN node only needs to provide the UE 3 with the execution condition(s) for the NES type CHO, excluding the candidate target cell configuration, thereby contributing to reducing the amount of signaling.

In some implementations, the UE 3 may start evaluating the one or more execution conditions (the second set) for the NES type CHO upon receiving the first signal indicating low activity of the source cell after receiving the first message (or CHO configuration), or upon expiration of the first threshold time period after receiving the first signal. Additionally, the UE 3 may stop evaluating the execution condition(s) (the first set) for the normal type CHO in response to starting the evaluation of the execution condition(s) (the second set) for the NES type CHO.

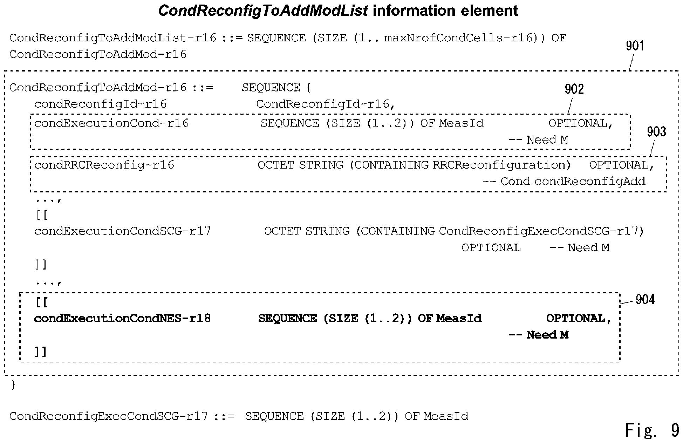

Fig. 9 shows an example of the format of a CondReconfigToAddModList information element (IE). The CondReconfigToAddModList IE is contained in a conditionalReconfiguration IE (i.e., CHO configuration) in an RRC Reconfiguration message. The conditionalReconfiguration IE can contain a condReconfigToAddModList IE 901. The condReconfigToAddModList IE 901 relates to a list of conditional reconfigurations (e.g., CHO, CPC) to be added or modified, and for each entry, it contains a condReconfigId IE, as well as a condExecutionCond IE 902 and a condRRCReconfig IE 903 associated therewith. The condExecutionCond IE 902 indicates one or more execution conditions that need to be fulfilled in order to trigger the execution of a normal type of conditional reconfiguration (e.g., CHO, CPC). The condRRCReconfig IE 903 is a candidate target cell configuration, specifically an RRC Reconfiguration message, which is applied if the associated one or more execution conditions are fulfilled. In the example shown in Fig. 9, the condReconfigToAddModList IE 901 can further include a condExecutionCondNES IE 904. The condExecutionCondNES IE 904 is associated with the same condRRCReconfig IE 903 as the condExecutionCond IE 902 within a single entry. The condExecutionCondNES IE 904 indicates one or more execution conditions that need to be fulfilled in order to trigger the execution of a NES type conditional reconfiguration (e.g., CHO, CPC).

### Fifth Example Embodiment

The present example embodiment provides modifications or enhancements to the first to fourth example embodiments. An example configuration of a radio communication system according to the present example embodiment may be the same as any of the example configurations described with reference to Figs. 1 to 3.

The network (e.g., RAN node 1 or 4) may perform one or more of the first, second, and third threshold time periods described in the above example embodiments, taking into account or based on the transition period or transition timing from the normal mode to the NES mode of the serving cell (i.e., the source cell in handover and CHO) in which the UE 3 resides. Additionally or alternatively, the network may perform one or more of the first, second, and third threshold time period configurations, taking into account or based on the transition period or transition timing of the target cell from the NES mode to the normal mode. The source RAN node or MN (e.g., RAN node 1 or 4) may receive information on the transition period or timing from the NES mode to the normal mode of the target cell in a handover request response message (e.g., Handover Request Acknowledge) from the target RAN node. Alternatively, the source RAN node or MN (e.g., RAN node 1 or 4) may receive this information in an inter-RAN node (Xn) message that is not related to the handover (e.g., NG-RAN NODE CONFIGURATION UPDATE).

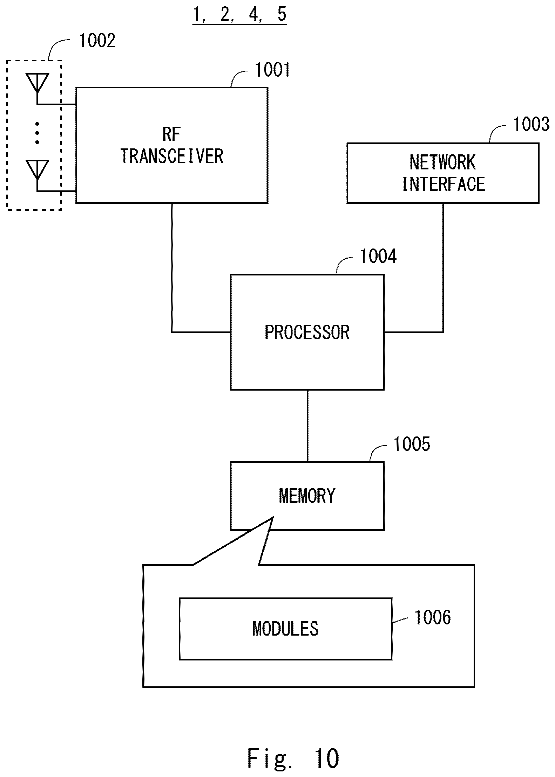

The following describes example configurations of the RAN nodes 1, 2, 4, and 5, and the UE 3 according to the multiple example embodiments described above. Fig. 10 is a block diagram showing an example configuration of the RAN node 1 according to the above example embodiments. The configurations of the other RAN nodes 2, 4, and 5 may be the same as the configuration shown in Fig. 10.

Referring to Fig. 10, the RAN node 1 includes a Radio Frequency (RF) transceiver 1001, a network interface 1003, a processor 1004, and a memory 1005. The RF transceiver 1001 performs analog RF signal processing to communicate with UEs including the UE 3. The RF transceiver 1001 may include a plurality of transceivers. The RF transceiver 1001 is coupled to an antenna array 1002 and the processor 1004. The RF transceiver 1001 receives modulated symbol data from the processor 1004, generates a transmission RF signal, and supplies the transmission RF signal to the antenna array 1002. The RF transceiver 1001 generates a baseband reception signal based on a reception RF signal received by the antenna array 1002 and supplies the baseband reception signal to the processor 1004. The RF transceiver 1001 may include an analog beamformer circuit for beamforming. The analog beamformer circuit includes, for example, a plurality of phase shifters and a plurality of power amplifiers.

The network interface 1003 is used to communicate with network nodes (e.g., RAN nodes 2 and 4, as well as control nodes and transfer nodes in the core network). For example, the network interface 1003 may include a network interface card (NIC) conforming to the IEEE 802.3 series.

The processor 1004 performs digital baseband signal processing (data plane processing) and control plane processing for radio communication. The processor 1004 may include a plurality of processors. For example, the processor 1004 may include a modem processor (e.g., a digital signal processor (DSP)) that performs digital baseband signal processing and a protocol stack processor (e.g., a central processing unit (CPU) or a micro processing unit (MPU)) that performs control plane processing.

For example, the digital baseband signal processing performed by the processor 1004 may include signal processing of the Service Data Adaptation Protocol (SDAP), Packet Data Convergence Protocol (PDCP), Radio Link Control (RLC), Medium Access Control (MAC), and Physical (PHY) layers. The control plane processing performed by the processor 1004 may include processing of Non-Access Stratum (NAS) messages, RRC messages, MAC Control Elements (CE), and Downlink Control Information (DCI).

The processor 1004 may include a digital beamformer module for beamforming. The digital beamformer module may include a Multiple Input Multiple Output (MIMO) encoder and precoder.

The memory 1005 is composed of a combination of a volatile memory and a non-volatile memory. The volatile memory is, for example, Static Random Access Memory (SRAM) or Dynamic RAM (DRAM) or a combination thereof. The non-volatile memory is Mask Read Only Memory (MROM), Electrically Erasable Programmable ROM (EEPROM), flash memory, or a hard disk drive, or any combination thereof. The memory 1005 may include storage located separate from the processor 1004. In this case, the processor 1004 may access the memory 1005 via a network interface 1003 or an I/O interface not shown.

The memory 1005 may store one or more software modules (computer programs) 1006 containing instructions and data for performing the processing by the RAN node 1 described in the above example embodiments. In some implementations, the processor 1004 may be configured to execute the software modules 1006 read from the memory 1005, thereby performing the processing of the RAN node 1 described in the above example embodiments.

In a case where the RAN node 1 is a CU (e.g., eNB-CU or gNB-CU) or a CU-CP, the RAN node 1 may not include the RF transceiver 1001 (and the antenna array 1002).

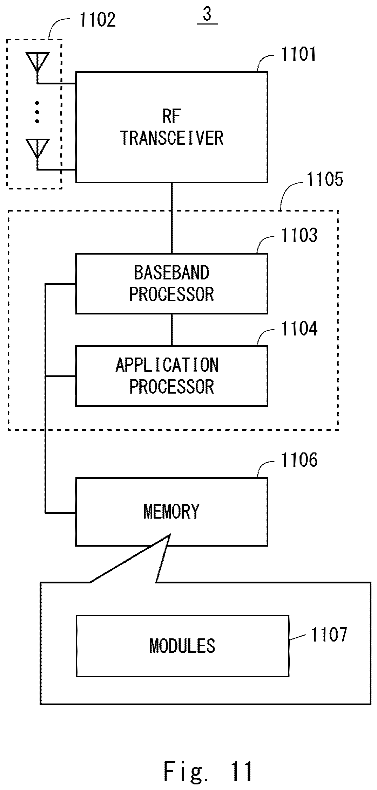

Fig. 11 shows a block diagram of an example configuration of the UE 3. The Radio Frequency (RF) transceiver 1101 performs analog RF signal processing to communicate with RAN nodes. The RF transceiver 1101 may include a plurality of transceivers. The analog RF signal processing performed by the RF transceiver 1101 includes frequency up-conversion, frequency down-conversion, and amplification. The RF transceiver 1101 is coupled with an antenna array 1102 and a baseband processor 1103. The RF transceiver 1101 receives modulated symbol data (or OFDM symbol data) from the baseband processor 1103, generates a transmission RF signal, and supplies the transmission RF signal to the antenna array 1102. The RF transceiver 1101 also generates a baseband received signal based on a received RF signal received by the antenna array 1102, and supplies the baseband received signal to the baseband processor 1103. The RF transceiver 1101 may include an analog beamformer circuit for beamforming. The analog beamformer circuit includes, for example, multiple phase shifters and multiple power amplifiers.

The baseband processor 1103 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 1103 may include signal processing of the SDAP, PDCP, RLC, MAC, and PHY layers. The control plane processing performed by the baseband processor 1103 may include processing of the Non-Access Stratum (NAS) protocol, RRC protocol, MAC CEs, and DCIs.

The baseband processor 1103 may perform MIMO encoding and precoding for beamforming.

The baseband processor 1103 may include a modem processor (e.g., DSP) that performs digital baseband signal processing and a protocol stack processor (e.g., CPU or MPU) that performs control plane processing. In this case, the protocol stack processor that performs control plane processing may be integrated with an application processor 1104 described below.

The application processor 1104 is also referred to as a CPU, MPU, microprocessor, or processor core. The application processor 1104 may include a plurality of processors (a plurality of processor cores). The application processor 1104 executes a system software program (operating system (OS)) and various application programs (e.g., call application, web browser, mailer, camera operation application, music player application) read from a memory 1106 or from a memory not shown, thereby realizing various functions of the UE 3.

In some implementations, as shown by the dashed line (1105) in Fig. 11, the baseband processor 1103 and the application processor 1104 may be integrated on a single chip. In other words, the baseband processor 1103 and the application processor 1104 may be implemented as a single System on Chip (SoC) device 1105. The SoC device may also be referred to as a system large-scale integration (LSI) or chipset.

The memory 1106 is a volatile memory or a non-volatile memory or a combination thereof. The memory 1106 may include a plurality of physically independent memory devices. The volatile memory is, for example, SRAM, DRAM, or a combination thereof. The non-volatile memory is, for example, MROM, EEPROM, flash memory, or a hard disk drive, or any combination thereof. For example, the memory 1106 may include an external memory device that is accessible by the baseband processor 1103, the application processor 1104, and the SoC 1105. The memory 1106 may include an internal memory device that is integrated into the baseband processor 1103, the application processor 1104, or the SoC 1105. In addition, the memory 1106 may include memory within a Universal Integrated Circuit Card (UICC).

The memory 1106 may store one or more software modules (or computer programs) 1107 that include a set of instructions and data for performing the processing by the UE 3 described in the above example embodiments. In some implementations, the baseband processor 1103 or the application processor 1104 may be configured to read and execute the software modules 1107 from the memory 1106, thereby performing the processing of the UE 3 as described in the example embodiments with reference to the drawings.

The control plane processing and operations performed by the UE 3 described in the above example embodiment can be implemented by elements other than the RF transceiver 1101 and the antenna array 1102, namely at least one of the baseband processor 1103 and the application processor 1104, and the memory 1106 that stores the software modules 1107.

As explained using Figs. 10 and 11, each of the processors of the plurality of RAN nodes and UE 3 in the above example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Bluray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to a device (e.g., radio terminal, RAN node) may also be described as or in Supplementary Notes directed to methods and programs. For example, some or all of the elements listed in Supplementary Notes 2-20 that depend on Supplementary Note 1 may also be listed as Supplementary Notes that depend on Supplementary Note 42 or 44 with the same dependency as Supplementary Notes 2-20. Similarly, some or all of the elements listed in Supplementary Notes 22-41 that depend on Supplementary Note 21 may also be listed as Supplementary Notes that depend on Supplementary Note 43 or 45 with the same dependency as Supplementary Notes 22-41. Some or all of the elements described in a Supplementary Note may be applicable to various hardware, software, storage for storing software, systems, and methods.

### (Supplementary Note 1)

A radio terminal comprising:
at least one memory; and
at least one processor coupled to the at least one memory and configured to:
   receive a first message containing configuration information for a conditional handover; and
   execute the conditional handover on a condition that a first threshold time period has expired, after receiving a first signal regarding low activity of a source cell of the conditional handover, following reception of the first message.

### (Supplementary Note 2)

The radio terminal according to Supplementary Note 1, wherein
the configuration information contains a configuration of one or more candidate target cells and a configuration of one or more handover execution conditions for each candidate target cell, and
the one or more handover execution conditions include a first condition that is satisfied due to the expiration of the first threshold time period after the reception of the first signal.

### (Supplementary Note 3)

The radio terminal according to Supplementary Note 2, wherein the at least one processor is configured to start evaluating the one or more handover execution conditions in response to receiving the first signal.

### (Supplementary Note 4)

The radio terminal according to Supplementary Note 2, wherein the at least one processor is configured to start evaluating the one or more handover execution conditions in response to receiving the first message.

### (Supplementary Note 5)

The radio terminal according to any one of Supplementary Notes 2 to 4, wherein the one or more handover execution conditions further include a second condition related to radio quality of an associated candidate target cell.

### (Supplementary Note 6)

The radio terminal according to Supplementary Note 1, wherein
the configuration information contains a configuration of one or more candidate target cells and a configuration of one or more handover execution conditions associated with each candidate target cell, and
the at least one processor is configured to start evaluating the one or more handover execution conditions in response to the expiration of the first threshold time period.

### (Supplementary Note 7)

The radio terminal according to Supplementary Note 6, wherein the at least one processor is configured to start evaluating the one or more handover execution conditions in response to the expiration of the first threshold time period after receiving the first signal or a third threshold time period after receiving the first message, whichever occurs first.

### (Supplementary Note 8)

The radio terminal according to any one of Supplementary Notes 2 to 7, wherein each of the one or more handover execution conditions is a condition that needs to be fulfilled in order to trigger an execution of a handover to an associated candidate target cell.

### (Supplementary Note 9)

The radio terminal according to any one of Supplementary Notes 1 to 8, wherein the at least one processor is configured to terminate the conditional handover without executing the conditional handover in response to an expiration of a second threshold time period or an elapse of a given moment in time after receiving the first message before the execution of the conditional handover is triggered.

### (Supplementary Note 10)

The radio terminal according to any one of Supplementary Notes 1 to 9, wherein the first signal includes an indication of low activity of the source cell.

### (Supplementary Note 11)

The radio terminal according to any one of Supplementary Notes 1 to 10, wherein the first signal is layer 1 signaling or layer 2 signaling.

### (Supplementary Note 12)

The radio terminal according to Supplementary Note 11, wherein the first threshold time period is measured from the reception of the first signal.

### (Supplementary Note 13)

The radio terminal according to any one of Supplementary Notes 1 to 10, wherein the first signal is layer 1 signaling indicating a change in system information.

### (Supplementary Note 14)

The radio terminal according to Supplementary Note 13, wherein the first threshold time period is measured from a beginning of a next system information modification period that follows a system information modification period during which the first signal is received.

### (Supplementary Note 15)

The radio terminal according to any one of Supplementary Notes 1 to 14, wherein the at least one processor is configured to detect the expiration of the threshold time period.

### (Supplementary Note 16)

The radio terminal according to any one of Supplementary Notes 1 to 15, wherein the configuration information indicates the first threshold time period.

### (Supplementary Note 17)

The radio terminal according to any one of Supplementary Notes 1 to 16, wherein the configuration information includes a first set of one or more execution conditions and a second set of one or more execution conditions, associated with a same candidate target cell configuration, wherein
the first set relates to a first type of conditional handover whose execution is triggered regardless of the reception of the first signal or the expiration of the first threshold time period, and
the second set relates to a second type of conditional handover that requires the expiration of the first threshold time period in order for its execution to be triggered.

### (Supplementary Note 18)

The radio terminal according to Supplementary Note 17, wherein the at least one processor is configured to:
start evaluating the first set in response to receiving the first message; and
start evaluating the second set in response to receiving the first message, in response to receiving the first signal, or in response to the expiration of the first threshold time period.

### (Supplementary Note 19)

The radio terminal according to Supplementary Note 17, wherein the at least one processor is configured to:
start evaluating the first set in response to receiving the first message;
start evaluating the second set in response to receiving the first signal, or in response to the expiration of the first threshold time period; and
stop evaluating the first set based on the start of evaluation of the second set.

### (Supplementary Note 20)

The radio terminal according to any one of Supplementary Notes 1 to 19, wherein the conditional handover includes a conditional change from one primary secondary cell group cell (PSCell) to another PSCell in dual connectivity.

### (Supplementary Note 21)

A radio access network (RAN) node comprising:
at least one memory; and
at least one processor coupled to the at least one memory and configured to transmit a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

### (Supplementary Note 22)

The RAN node according to Supplementary Note 21, wherein
the configuration information contains a configuration of one or more candidate target cells and a configuration of one or more handover execution conditions for each candidate target cell, and
the one or more handover execution conditions include a first condition that is satisfied due to the expiration of the first threshold time period after the reception of the first signal.

### (Supplementary Note 23)

The RAN node according to Supplementary Note 22, wherein the configuration information causes the radio terminal to start evaluating the one or more handover execution conditions in response to receiving the first signal.

### (Supplementary Note 24)

The RAN node according to Supplementary Note 22, wherein the configuration information causes the radio terminal to start evaluating the one or more handover execution conditions in response to receiving the first message.

### (Supplementary Note 25)

The RAN node according to any one of Supplementary Notes Supplementary Note 22 to 24, wherein the one or more handover execution conditions further include a second condition related to radio quality of an associated candidate target cell.

### (Supplementary Note 26)

The RAN node according to Supplementary Note 21, wherein
the configuration information contains a configuration of one or more candidate target cells and a configuration of one or more handover execution conditions associated with each candidate target cell, and
the configuration information causes the radio terminal to start evaluating the one or more handover execution conditions in response to the expiration of the first threshold time period.

### (Supplementary Note 27)

The RAN node according to Supplementary Note 26, wherein the configuration information causes the radio terminal to start evaluating the one or more handover execution conditions in response to the expiration of the first threshold time period after receiving the first signal or a third threshold time period after receiving the first message, whichever occurs first.

### (Supplementary Note 28)

The RAN node according to any one of Supplementary Notes 21 to 27, wherein the configuration information indicates the first threshold time period.

### (Supplementary Note 29)

The RAN node according to any one of Supplementary Notes 21 to 28, wherein the configuration information causes the radio terminal to terminate the conditional handover without executing the conditional handover in response to an expiration of a second threshold time period or an elapse of a given moment in time after receiving the first message before the execution of the conditional handover is triggered.

### (Supplementary Note 30)

The RAN node according to Supplementary Note 29, wherein the configuration information indicates the second threshold time period.

### (Supplementary Note 31)

The RAN node according to any one of Supplementary Notes 21 to 30, wherein the first signal includes an indication of low activity of the source cell.

### (Supplementary Note 32)

The RAN node according to any one of Supplementary Notes 21 to 31, wherein the first signal is layer 1 signaling or layer 2 signaling.

### (Supplementary Note 33)

The RAN node according to Supplementary Note 32, wherein the first threshold time period is measured from the reception of the first signal.

### (Supplementary Note 34)

The RAN node according to any one of Supplementary Notes 21 to 31, wherein the first signal is layer 1 signaling indicating a change in system information.

### (Supplementary Note 35)

The RAN node according to Supplementary Note 34, wherein the first threshold time period is measured from a beginning of a next modification period that follows a modification period during which the first signal is received.

### (Supplementary Note 36)

The RAN node according to any one of Supplementary Notes 21 to 35, wherein the configuration information includes a first set of one or more execution conditions and a second set of one or more execution conditions, associated with a same candidate target cell configuration, wherein
the first set relates to a first type of conditional handover whose execution is triggered regardless of the reception of the first signal or the expiration of the first threshold time period, and
the second set relates to a second type of conditional handover that requires the expiration of the first threshold time period in order for its execution to be triggered.

### (Supplementary Note 37)

The RAN node according to Supplementary Note 36, wherein the configuration information causes the radio terminal to:
start evaluating the first set in response to receiving the first message; and
start evaluating the second set in response to receiving the first signal, or in response to the expiration of the first threshold time period.

### (Supplementary Note 38)

The RAN node according to Supplementary Note 37, wherein the configuration information causes the radio terminal to stop evaluating the first set based on the start of evaluation of the second set.

### (Supplementary Note 39)

The RAN node according to any one of Supplementary Notes 21 to 38, wherein the RAN node is configured to transmit the first signal after transmitting the first message.

### (Supplementary Note 40)

The RAN node according to any one of Supplementary Notes 21 to 38, wherein
the RAN node is configured to operate as a master node providing a primary cell for dual connectivity, and
the conditional handover includes a conditional change from one primary secondary cell group cell (PSCell) to another PSCell in dual connectivity.

### (Supplementary Note 41)

The RAN node according to Supplementary Note 40, wherein the first signal is transmitted by a secondary node that provides the one PSCell.

### (Supplementary Note 42)

A method performed by a radio terminal, the method comprising:
receiving a first message containing configuration information for a conditional handover; and
executing the conditional handover on a condition that a first threshold time period has expired, after receiving a first signal regarding low activity of a source cell of the conditional handover, following reception of the first message.

### (Supplementary Note 43)

A method performed by a radio access network (RAN) node, the method comprising:
transmitting a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

### (Supplementary Note 44)

A program for causing a computer to perform a method for a radio terminal, the method comprising:
receiving a first message containing configuration information for a conditional handover; and
executing the conditional handover on a condition that a first threshold time period has expired, after receiving a first signal regarding low activity of a source cell of the conditional handover, following reception of the first message.

### (Supplementary Note 45)

A program for causing a computer to perform a method for a radio access network (RAN) node,
the method comprising transmitting a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

### (Supplementary Note 46)

A radio terminal comprising:
at least one memory; and
at least one processor coupled to the at least one memory and configured to:
   receive a first message containing configuration information for a conditional handover; and
   execute the conditional handover on a condition that a first signal is further received after receiving the first message, wherein
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

### (Supplementary Note 47)

A radio access network (RAN) node comprising:
at least one memory; and
at least one processor coupled to the at least one memory and configured to transmit a first message containing configuration information for a conditional handover to a radio terminal, wherein
the configuration information causes the radio terminal to execute the conditional handover on a condition that a first signal is further received after receiving the first message,
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

### (Supplementary Note 48)

A method performed by a radio terminal, the method comprising:
receiving a first message containing configuration information for a conditional handover; and
executing the conditional handover on a condition that a first signal is further received after receiving the first message, wherein
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

### (Supplementary Note 49)

A method performed by a radio access network (RAN) node, the method comprising:
transmitting a first message containing configuration information for a conditional handover to a radio terminal, wherein
the configuration information causes the radio terminal to execute the conditional handover on a condition that a first signal is further received after receiving the first message,
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

### (Supplementary Note 50)

A radio terminal comprising:
at least one memory; and
at least one processor coupled to the at least one memory and configured to:
   receive a first message containing configuration information for a conditional handover;
   after receiving the first message, further receive layer 1 signaling including an indication of a change in system information in a source cell of the conditional handover; and
   start evaluating one or more execution conditions for the conditional handover in a next system information modification period that follows a system information modification period during which the layer 1 signaling is received.

### (Supplementary Note 51)

The radio terminal according to Supplementary Note 50, wherein the change in the system information relates to low activity of the source cell.

### (Supplementary Note 52)

A radio access network (RAN) node comprising:
at least one memory; and
at least one processor coupled to the at least one memory and configured to transmit a first message containing configuration information for a conditional handover to a radio terminal, wherein
the configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

### (Supplementary Note 53)

The RAN node according to Supplementary Note 52, wherein the change in the system information relates to low activity of the source cell.

### (Supplementary Note 54)

A method performed by a radio terminal, the method comprising:
receiving a first message containing configuration information for a conditional handover;
after receiving the first message, further receiving layer 1 signaling including an indication of a change in system information in a source cell of the conditional handover; and
starting evaluating one or more execution conditions for the conditional handover in a next system information modification period that follows a system information modification period during which the layer 1 signaling is received.

### (Supplementary Note 55)

A method performed by a radio access network (RAN) node, the method comprising:
transmitting a first message containing configuration information for a conditional handover to a radio terminal, wherein
the configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

### (Supplementary Note 56)

A radio terminal comprising:
at least one memory; and
at least one processor coupled to the at least one memory and configured to:
   receive a first message containing configuration information for a conditional handover; and
   evaluate a execution condition for the conditional handover based on the configuration information, wherein
the configuration information includes a first set of one or more execution conditions and a second set of one or more execution conditions, associated with a same candidate target cell configuration,
the first set relates to a first type of conditional handover that does not require, in order for its execution to be triggered, a first signal regarding low activity of a source cell of the conditional handover to be received by the radio terminal after the first message is received, and
the second set relates to a second type of conditional handover that requires, in order for its execution to be triggered, the first signal to be received by the radio terminal after the first message is received.

### (Supplementary Note 57)

The radio terminal according to Supplementary Note 56, wherein the at least one processor is configured to:
start evaluating the first set in response to receiving the first message; and
start evaluating the second set in response to receiving the first message, in response to receiving the first signal, or in response to an expiration of a first threshold time period following receipt of the first signal.

### (Supplementary Note 58)

The radio terminal according to Supplementary Note 56, wherein the at least one processor is configured to:
start evaluating the first set in response to receiving the first message;
start evaluating the second set in response to receiving the first signal, or in response to an expiration of a first threshold time period following receipt of the first signal; and
stop evaluating the first set based on the start of evaluation of the second set.

### (Supplementary Note 59)

A radio access network (RAN) node comprising:
at least one memory; and
at least one processor coupled to the at least one memory and configured to transmit a first message containing configuration information for a conditional handover to a radio terminal, wherein
the configuration information includes a first set of one or more execution conditions and a second set of one or more execution conditions, associated with a same candidate target cell configuration,
the first set relates to a first type of conditional handover that does not require, in order for its execution to be triggered, a first signal regarding low activity of a source cell of the conditional handover to be received by the radio terminal after the first message is received, and
the second set relates to a second type of conditional handover that requires, in order for its execution to be triggered, the first signal to be received by the radio terminal after the first message is received.

This application is based upon and claims the benefit of priority from Japanese Patent Application No. 2023-020904, filed on February 14, 2023, the disclosure of which is incorporated herein in its entirety by reference.

### Reference Signs List

- 1, 2, 4, 5: RAN node
- 3: UE
- 1004: Processor
- 1005: Memory
- 1006: Modules
- 1103: Baseband processor
- 1104: Application processor
- 1106: Memory
- 1107: Modules

## Claims

1. A radio terminal comprising:
at least one memory; and
at least one processor coupled to the at least one memory and configured to:
receive a first message containing configuration information for a conditional handover; and
execute the conditional handover on a condition that a first threshold time period has expired, after receiving a first signal regarding low activity of a source cell of the conditional handover, following reception of the first message.

2. The radio terminal according to claim 1, wherein
the configuration information contains a configuration of one or more candidate target cells and a configuration of one or more handover execution conditions for each candidate target cell, and
the one or more handover execution conditions include a first condition that is satisfied due to the expiration of the first threshold time period after the reception of the first signal.

3. The radio terminal according to claim 2, wherein the at least one processor is configured to start evaluating the one or more handover execution conditions in response to receiving the first signal.

4. The radio terminal according to claim 2, wherein the at least one processor is configured to start evaluating the one or more handover execution conditions in response to receiving the first message.

5. The radio terminal according to any one of claims 2 to 4, wherein the one or more handover execution conditions further include a second condition related to radio quality of an associated candidate target cell.

6. The radio terminal according to claim 1, wherein
the configuration information contains a configuration of one or more candidate target cells and a configuration of one or more handover execution conditions associated with each candidate target cell, and
the at least one processor is configured to start evaluating the one or more handover execution conditions in response to the expiration of the first threshold time period.

7. The radio terminal according to claim 6, wherein the at least one processor is configured to start evaluating the one or more handover execution conditions in response to the expiration of the first threshold time period after receiving the first signal or a third threshold time period after receiving the first message, whichever occurs first.

8. The radio terminal according to any one of claims 2 to 7, wherein each of the one or more handover execution conditions is a condition that needs to be fulfilled in order to trigger an execution of a handover to an associated candidate target cell.

9. The radio terminal according to any one of claims 1 to 8, wherein the at least one processor is configured to terminate the conditional handover without executing the conditional handover in response to an expiration of a second threshold time period or an elapse of a given moment in time after receiving the first message before the execution of the conditional handover is triggered.

10. The radio terminal according to any one of claims 1 to 9, wherein the first signal includes an indication of low activity of the source cell.

11. The radio terminal according to any one of claims 1 to 10, wherein the first signal is layer 1 signaling or layer 2 signaling.

12. The radio terminal according to claim 11, wherein the first threshold time period is measured from the reception of the first signal.

13. The radio terminal according to any one of claims 1 to 10, wherein the first signal is layer 1 signaling indicating a change in system information.

14. The radio terminal according to claim 13, wherein the first threshold time period is measured from a beginning of a next system information modification period that follows a system information modification period during which the first signal is received.

15. The radio terminal according to any one of claims 1 to 14, wherein the at least one processor is configured to detect the expiration of the threshold time period.

16. The radio terminal according to any one of claims 1 to 15, wherein the configuration information indicates the first threshold time period.

17. The radio terminal according to any one of claims 1 to 16, wherein the configuration information includes a first set of one or more execution conditions and a second set of one or more execution conditions, associated with a same candidate target cell configuration, wherein
the first set relates to a first type of conditional handover whose execution is triggered regardless of the reception of the first signal or the expiration of the first threshold time period, and
the second set relates to a second type of conditional handover that requires the expiration of the first threshold time period in order for its execution to be triggered.

18. The radio terminal according to claim 17, wherein the at least one processor is configured to:
start evaluating the first set in response to receiving the first message; and
start evaluating the second set in response to receiving the first message, in response to receiving the first signal, or in response to the expiration of the first threshold time period.

19. The radio terminal according to claim 17, wherein the at least one processor is configured to:
start evaluating the first set in response to receiving the first message;
start evaluating the second set in response to receiving the first signal, or in response to the expiration of the first threshold time period; and
stop evaluating the first set based on the start of evaluation of the second set.

20. The radio terminal according to any one of claims 1 to 19, wherein the conditional handover includes a conditional change from one primary secondary cell group cell (PSCell) to another PSCell in dual connectivity.

21. A radio access network (RAN) node comprising:
at least one memory; and
at least one processor coupled to the at least one memory and configured to transmit a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

22. The RAN node according to claim 21, wherein
the configuration information contains a configuration of one or more candidate target cells and a configuration of one or more handover execution conditions for each candidate target cell, and
the one or more handover execution conditions include a first condition that is satisfied due to the expiration of the first threshold time period after the reception of the first signal.

23. The RAN node according to claim 22, wherein the configuration information causes the radio terminal to start evaluating the one or more handover execution conditions in response to receiving the first signal.

24. The RAN node according to claim 22, wherein the configuration information causes the radio terminal to start evaluating the one or more handover execution conditions in response to receiving the first message.

25. The RAN node according to any one of claims claim 22 to 24, wherein the one or more handover execution conditions further include a second condition related to radio quality of an associated candidate target cell.

26. The RAN node according to claim 21, wherein
the configuration information contains a configuration of one or more candidate target cells and a configuration of one or more handover execution conditions associated with each candidate target cell, and
the configuration information causes the radio terminal to start evaluating the one or more handover execution conditions in response to the expiration of the first threshold time period.

27. The RAN node according to claim 26, wherein the configuration information causes the radio terminal to start evaluating the one or more handover execution conditions in response to the expiration of the first threshold time period after receiving the first signal or a third threshold time period after receiving the first message, whichever occurs first.

28. The RAN node according to any one of claims 21 to 27, wherein the configuration information indicates the first threshold time period.

29. The RAN node according to any one of claims 21 to 28, wherein the configuration information causes the radio terminal to terminate the conditional handover without executing the conditional handover in response to an expiration of a second threshold time period or an elapse of a given moment in time after receiving the first message before the execution of the conditional handover is triggered.

30. The RAN node according to claim 29, wherein the configuration information indicates the second threshold time period.

31. The RAN node according to any one of claims 21 to 30, wherein the first signal includes an indication of low activity of the source cell.

32. The RAN node according to any one of claims 21 to 31, wherein the first signal is layer 1 signaling or layer 2 signaling.

33. The RAN node according to claim 32, wherein the first threshold time period is measured from the reception of the first signal.

34. The RAN node according to any one of claims 21 to 31, wherein the first signal is layer 1 signaling indicating a change in system information.

35. The RAN node according to claim 34, wherein the first threshold time period is measured from a beginning of a next modification period that follows a modification period during which the first signal is received.

36. The RAN node according to any one of claims 21 to 35, wherein the configuration information includes a first set of one or more execution conditions and a second set of one or more execution conditions, associated with a same candidate target cell configuration, wherein
the first set relates to a first type of conditional handover whose execution is triggered regardless of the reception of the first signal or the expiration of the first threshold time period, and
the second set relates to a second type of conditional handover that requires the expiration of the first threshold time period in order for its execution to be triggered.

37. The RAN node according to claim 36, wherein the configuration information causes the radio terminal to:
start evaluating the first set in response to receiving the first message; and
start evaluating the second set in response to receiving the first signal, or in response to the expiration of the first threshold time period.

38. The RAN node according to claim 37, wherein the configuration information causes the radio terminal to stop evaluating the first set based on the start of evaluation of the second set.

39. The RAN node according to any one of claims 21 to 38, wherein the RAN node is configured to transmit the first signal after transmitting the first message.

40. The RAN node according to any one of claims 21 to 38, wherein
the RAN node is configured to operate as a master node providing a primary cell for dual connectivity, and
the conditional handover includes a conditional change from one primary secondary cell group cell (PSCell) to another PSCell in dual connectivity.

41. The RAN node according to claim 40, wherein the first signal is transmitted by a secondary node that provides the one PSCell.

42. A method performed by a radio terminal, the method comprising:
receiving a first message containing configuration information for a conditional handover; and
executing the conditional handover on a condition that a first threshold time period has expired, after receiving a first signal regarding low activity of a source cell of the conditional handover, following reception of the first message.

43. A method performed by a radio access network (RAN) node, the method comprising:
transmitting a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

44. A program for causing a computer to perform a method for a radio terminal, the method comprising:
receiving a first message containing configuration information for a conditional handover; and
executing the conditional handover on a condition that a first threshold time period has expired, after receiving a first signal regarding low activity of a source cell of the conditional handover, following reception of the first message.

45. A program for causing a computer to perform a method for a radio access network (RAN) node,
the method comprising transmitting a first message containing configuration information for a conditional handover to a radio terminal, wherein
the configuration information causes the radio terminal to execute the conditional handover on a condition that a first threshold time period has expired, after receiving a first signal regarding low activity of a source cell of the conditional handover, following reception of the first message.

46. A radio terminal comprising:
at least one memory; and
at least one processor coupled to the at least one memory and configured to:
receive a first message containing configuration information for a conditional handover; and
execute the conditional handover on a condition that a first signal is further received after receiving the first message, wherein
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

47. A radio access network (RAN) node comprising:
at least one memory; and
at least one processor coupled to the at least one memory and configured to transmit a first message containing configuration information for a conditional handover to a radio terminal, wherein
the configuration information causes the radio terminal to execute the conditional handover on a condition that a first signal is further received after receiving the first message,
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

48. A method performed by a radio terminal, the method comprising:
receiving a first message containing configuration information for a conditional handover; and
executing the conditional handover on a condition that a first signal is further received after receiving the first message, wherein
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

49. A method performed by a radio access network (RAN) node, the method comprising:
transmitting a first message containing configuration information for a conditional handover to a radio terminal, wherein
the configuration information causes the radio terminal to execute the conditional handover on a condition that a first signal is further received after receiving the first message,
the first signal is layer 1 signaling that includes an indication of a change in system information in a source cell of the conditional handover and further includes an indication of low activity of the source cell, and
the change in the system information includes a change in the system information to indicate that access to the source cell by a radio terminal that does not support Network Energy Saving (NES) is barred.

50. A radio terminal comprising:
at least one memory; and
at least one processor coupled to the at least one memory and configured to:
receive a first message containing configuration information for a conditional handover;
after receiving the first message, further receive layer 1 signaling including an indication of a change in system information in a source cell of the conditional handover; and
start evaluating one or more execution conditions for the conditional handover in a next system information modification period that follows a system information modification period during which the layer 1 signaling is received.

51. The radio terminal according to claim 50, wherein the change in the system information relates to low activity of the source cell.

52. A radio access network (RAN) node comprising:
at least one memory; and
at least one processor coupled to the at least one memory and configured to transmit a first message containing configuration information for a conditional handover to a radio terminal, wherein
the configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

53. The RAN node according to claim 52, wherein the change in the system information relates to low activity of the source cell.

54. A method performed by a radio terminal, the method comprising:
receiving a first message containing configuration information for a conditional handover;
after receiving the first message, further receiving layer 1 signaling including an indication of a change in system information in a source cell of the conditional handover; and
starting evaluating one or more execution conditions for the conditional handover in a next system information modification period that follows a system information modification period during which the layer 1 signaling is received.

55. A method performed by a radio access network (RAN) node, the method comprising:
transmitting a first message containing configuration information for a conditional handover to a radio terminal, wherein
the configuration information causes the radio terminal to start evaluating one or more execution conditions for the conditional handover in a next system information modification period that follows a system information modification period during which layer 1 signaling including an indication of a change in system information in a source cell of the conditional handover is received after receiving the first message.

56. A radio terminal comprising:
at least one memory; and
at least one processor coupled to the at least one memory and configured to:
receive a first message containing configuration information for a conditional handover; and
evaluate a execution condition for the conditional handover based on the configuration information, wherein
the configuration information includes a first set of one or more execution conditions and a second set of one or more execution conditions, associated with a same candidate target cell configuration,
the first set relates to a first type of conditional handover that does not require, in order for its execution to be triggered, a first signal regarding low activity of a source cell of the conditional handover to be received by the radio terminal after the first message is received, and
the second set relates to a second type of conditional handover that requires, in order for its execution to be triggered, the first signal to be received by the radio terminal after the first message is received.

57. The radio terminal according to claim 56, wherein the at least one processor is configured to:
start evaluating the first set in response to receiving the first message; and
start evaluating the second set in response to receiving the first message, in response to receiving the first signal, or in response to an expiration of a first threshold time period following receipt of the first signal.

58. The radio terminal according to claim 56, wherein the at least one processor is configured to:
start evaluating the first set in response to receiving the first message;
start evaluating the second set in response to receiving the first signal, or in response to an expiration of a first threshold time period following receipt of the first signal; and
stop evaluating the first set based on the start of evaluation of the second set.

59. A radio access network (RAN) node comprising:
at least one memory; and
at least one processor coupled to the at least one memory and configured to transmit a first message containing configuration information for a conditional handover to a radio terminal, wherein
the configuration information includes a first set of one or more execution conditions and a second set of one or more execution conditions associated with a same candidate target cell configuration,
the first set relates to a first type of conditional handover that does not require, in order for its execution to be triggered, a first signal regarding low activity of a source cell of the conditional handover to be received by the radio terminal after the first message is received, and
the second set relates to a second type of conditional handover that requires, in order for its execution to be triggered, the first signal to be received by the radio terminal after the first message is received.
